(19) **Europäisches Patentamt**

**European Patent Office**

**Office européen des brevets**

(11) **EP 1 132 679 B1**

(12) **EUROPÄISCHE PATENTSCHRIFT**

(45) Veröffentlichungstag und Bekanntmachung des Hinweises auf die Patenterteilung:
**05.06.2002 Patentblatt 2002/23**

(51) Int Cl.$^7$: **F21V 8/00**

(21) Anmeldenummer: **01105865.8**

(22) Anmeldetag: **09.03.2001**

(54) **Leuchtensystem**

Lighting system

Système d'éclairage

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **09.03.2000 DE 10011516**

(43) Veröffentlichungstag der Anmeldung:
**12.09.2001 Patentblatt 2001/37**

(73) Patentinhaber: **Siteco Beleuchtungstechnik GmbH**
**83301 Traunreut (DE)**

(72) Erfinder:
- **Belloni, Paola**
  **83278 Traunreut (DE)**
- **Leibig, Joachim**
  **83376 Traunwalchen (DE)**
- **Prodell, Peter**
  **83308 Trostberg (DE)**
- **Brüggemann, Jürgen**
  **83301 Traunreut (DE)**
- **Ferdows, Sonja**
  **83278 Traunstein (DE)**
- **Königstein, Hans-Peter**
  **83349 Palling (DE)**
- **Kroke, Martin**
  **83301 Traunreut (DE)**
- **Priller, Reinhold**
  **83404 Ainring (DE)**
- **Wolkersdorfer, Josef**
  **83278 Traunstein (DE)**
- **Klimiont, Thomas**
  **90584 Allersberg (DE)**

(74) Vertreter: **Schohe, Stefan et al**
**Forrester & Boehmert**
**Pettenkoferstrasse 20-22**
**80336 München (DE)**

(56) Entgegenhaltungen:
**EP-A- 0 638 764**

**Beschreibung**

Die Erfindung betrifft ein Leuchtensystem, insbesondere ein System von Innenraumleuchten. Insbesondere bei Innenraumleuchten führen die vielfältigen Beleuchtungsaufgaben, die in Innenräumen auftreten, und die sich häufig wechselnden räumlichen Vorgaben, z.B. bei Einbauleuchten, zu teilweise sehr verschiedenen Formen und lichttechnischen Ausgestaltungen. Beispielsweise wird für Leuchten für Bildschirmarbeitsplätze eine Abschirmung, d.h. eine Absenkung der mittleren Leuchtdichte an der Lichtaustrittsfläche oberhalb eines Grenzwinkels zu einer Senkrechten zu der Lichtaustrittsfläche in mehreren Ebenen für einen Abschirmwinkel z.B. von 60° durch die geltenden Normen und Normvorschläge gefordert, wobei der Grenzwert der Leuchtdichte nach diesen Normen und Normvorschlägen bei 200 cd/m$^2$, 500 cd/m$^2$ oder 1000 cd/m$^2$ liegt. Für andere Leuchtentypen, beispielsweise Wallwasher oder Ceilingwasher, werden an die Lichtstärkeverteilungskurve vollständig andere Anforderungen gestellt. Dementsprechend mußte die Lichttechnik der bisherigen Leuchten individuell an die jeweilige Funktion und gegebenenfalls auch an die jeweiligen räumlichen Vorgaben angepaßt werden. Beispielsweise wird konventionell die Abschirmung durch die Reflektorwände und/oder durch ein Lamellenraster herbeigeführt. Eine Änderung des Abschirmwinkels in der Richtung senkrecht zur Lampenachse erforderte z.B. eine Änderung der Bauhöhe, was eine Anpassung des Gehäuses, der elektrischen Vorrichtungen usw. erforderlich machte. Ebenso erfordert nach der konventionellen Technik der Umbau einer direkt strahlenden Leuchte in eine indirekt strahlende Leuchte einen kompletten Austausch des Reflektors. Dementsprechend mußten für die einzelnen Leuchten eine größere Anzahl von individuellen Teilen hergestellt werden, was die Herstellungskosten erhöhte.

Es ist die Aufgabe der Erfindung, eine Möglichkeit zur Verfügung zu stellen, wie Leuchten, insbesondere Innnenleuchten verschiedener Bauart, rationeller hergestellt werden können.

Diese Aufgabe wird erfindungsgemäß gelöst durch ein Leuchtensystem, bestehend aus mehreren Leuchten mit unterschiedlichen Lichtabstrahlungseigenschaften, insbesondere Einbau-, Anbau- und/oder Pendelleuchten, welche jeweils mindestens einen Hohllichtleiter mit einem Hohlraum, in den von einer oder mehreren Lampen Licht eingestrahlt wird und mindestens eine Lichtauskoppeleinrichtung zum Auskoppeln von Licht aus dem Hohllichtleiter zu einer Lichtaustrittsfläche aufweisen, wobei die Lichtauskoppeleinrichtung mindestens ein lichtdurchlässiges Element, insbesondere eine lichtdurchlässige Platte, mit einer Grenzfläche zwischen zwei Medien mit einem unterschiedlichen Brechungsindex aufweist, die mit einer lichtbrechenden Struktur versehen ist, welche in mindestens einer Ebene senkrecht zur Lichtaustrittsfläche Licht gerichtet ablenkt, derart, daß in dieser Ebene die Lichtstärkeverteilungskurve des an der Lichtaustrittsfläche austretenden Lichts beeinflußt wird, wobei die Leuchten eine Tragekonstruktion, insbesondere ein Gehäuse, aufweisen, an oder in welcher zumindest ein optisch wirksames Element, welches den Strahlengang des von der Lampe abgestrahlten Lichts beeinflußt, insbesondere eine Lichtauskoppeleinrichtung, ein der Lichtauskoppeleinrichtung in dem Hohllichtleiter gegenüberstehender Dachreflektor oder ein anderes reflektierendes und/oder lichtdurchlässiges Element des Hohllichtleiters und/oder ein Einkoppelreflektor zum Einkoppeln von Licht von der Lampe in den Hohllichtleiter, angebracht ist, dadurch gekennzeichnet, daß bei jeder Leuchte zumindest ein optisch wirksames Bauelement, welches den Strahlengang des von der Lampe abgestrahlten Lichts beeinflußt, insbesondere ein reflektierendes oder lichtbrechendes Element, ein vorgefertigtes Bauelement ist, das so bemessen ist, daß es an bzw. in jeder Tragekonstruktion einer Leuchte des Systems als optisch wirksames Element an- und/oder eingebaut werden kann.

Die Erfindung betrifft insbesondere solche Leuchtensysteme, bei denen zumindest bei einem Teil der Leuchten, insbesondere bei allen Leuchten, die Lampe oder Lampen außerhalb des Hohllichtleiters angeordnet sind und von außen in den Hohllichtleiter Licht einkoppeln. Die Lichteinkopplung kann bei den Leuchten des Systems insbesondere seitlich von einer Schmalseite aus erfolgen.

Unter einem Leuchtensystem ist in diesem Zusammenhang eine Gruppe oder Menge von realen Leuchten zu verstehen, welche jeweils wie vorangehend beschrieben aufgebaut sind und welche in konstruktiver Hinsicht die Gemeinsamkeit haben, daß zumindest ein optisch wirksames Bauelement mit den erwähnten Eigenschaften bei der Tragekonstruktion jeder Leuchte verwendet werden kann. Verschiedene Leuchten können einander entsprechende Bauelemente an entsprechenden Stellen der jeweiligen Tragekonstruktion aufweisen, bei denen die für die Montage relevanten Abmessungen, z.B. Länge und Breite, identisch sind, die aber unterschiedliche optische Eigenschaften besitzen. Das Leuchtensystem bildet die Gesamtheit dieser konkreten Leuchten.

Die vorangehend erwähnte lichtbrechende Struktur, welche Licht gerichtet ablenkt und die Lichtstärkeverteilungskurve in einer Ebene beeinflußt, kann insbesondere eine lichtbrechende Struktur sein, welche in mindestens einer Ebene senkrecht zu der Lichtaustrittsfläche eine Lichtabstrahlung oberhalb eines Grenzwinkels im wesentlichen verhindert, derart, daß in dieser Ebene eine Abschirmung des an der Lichtaustrittsfläche austretenden Lichts herbeigeführt wird.

Unter einer Abschirmung wird die Absenkung der mittleren Leuchtdichte an der Lichtaustrittsfläche oberhalb eines Grenzwinkels zu einer Senkrechten zu der Lichtaustrittsfläche unter einen vorgegebenen Grenzwert, z.B. 200 cd/m$^2$, 500 cd/m$^2$ oder 1000 cd/m$^2$, verstanden.

Die vorangehend erwähnte lichtbrechende Struktur kann die Lichtstärkeverteilungskurve jedoch auch in anderer Weise beeinflussen. Beispielsweise kann durch eine geeignete Wahl der Strukturelemente eine breitstrahlende Lichtstärkeverteilung erzeugt werden, bei welcher die Lichtstärkeverteilungskurve im Bereich von 0° ein Minimum besitzt und im Bereich zwischen 0° und 90° ein ausgeprägtes Maximum, wobei die Lage des Maximums von den verwendeten Elementen der lichtbrechenden Struktur, teilweise aber auch von anderen Komponenten, wie beispielsweise dem Dachreflektor eines Hohllichtleiters, abhängt. Je nach der Ausgestaltung der Leuchte kann eine solche breitstrahlende Lichtstärkeverteilung symmetrisch oder asymmetrisch sein.

Nach einer Ausführungsform der Erfindung kann vorgesehen sein, daß bei jeder Leuchte zumindest ein Dachreflektor, ein Element der Lichtauskoppeleinrichtung mit einer lichtbrechenden Struktur und/oder ein Einkoppelreflektor ein vorgefertigtes Bauelement ist, das so bemessen ist, daß es an bzw. in jeder Tragekonstruktion einer Leuchte des Systems an- und/oder eingebaut werden kann.

Insbesondere kann vorgesehen sein, daß für alle Leuchten des Systems zumindest ein mit einer lichtbrechenden Struktur versehenes Element der Lichtauskoppeleinrichtung, ein Dachreflektor und/oder ein Einkoppelreflektor hinsichtlich der für den Einbau bzw. Anbau in die Tragekonstruktion relevanten Maße im wesentlichen gleich bemessen ist und vorzugsweise insgesamt dieselben Ein- oder Anbaumaße aufweist.

Die relevanten Maße hängen von den Einzelheiten der Tragekonstruktion ab. Beispielsweise kann die Höhe des Bauelements variieren, wenn die Tragekonstruktion oder die Konstruktion der Leuchte insgesamt keine Vorgabe an diese Dimension macht.

Erfindungsgemäß wird also ein System zur Verfügung gestellt, dessen Elemente nach Art eines Baukastens aufgebaut ist, wobei Elemente dieses Baukastens, z.B. Einkoppelreflektoren, Dachreflektoren, und/oder Prismenplatten sowie ggf. weitere Elemente sein können, die bei allen Leuchten des Systems verwendet werden können.

Die Erfindung kann insbesondere vorsehen, daß eine lichttechnische Funktionseinheit, wie eine Lichteinkoppeleinrichtung oder eine Lichtauskoppeleinrichtung, modulartig aus mehreren Elementen aufgebaut ist. Beispielsweise kann die Lichteinkopplung von den Lampen in den Hohllichtleiter durch mehrere in der Längsrichtung der Lampe aneinandergesetzte Einkoppelreflektoren mit standardisierten Abmessungen erfolgen. Ebenso kann die Lichtauskoppeleinrichtung aus mehreren Platten mit lichtbrechenden Strukturen bestehen, die standardisierte Maße haben. Vorzugsweise wird eine solche lichttechnische Einheit aus Elementen aufgebaut, welche alle die gleichen Abmessungen besitzen.

In dem erfindungsgemäßen Leuchtensystem können mehrere Leuchten dieselbe Tragekonstruktion aufweisen und sich jeweils durch ein oder mehrere an der Tragekonstruktion befestigte optisch wirksame Bauelemente, welche jeweils dieselben Maße haben, aber unterschiedliche lichttechnische Eigenschaften aufweisen, unterscheiden.

Das optisch wirksame Bauelement kann insbesondere ein reflektierendes oder lichtbrechendes Element, z. B. ein Einkoppelreflektor, ein Dachreflektor des Hohllichtleiters und/oder eine Lichtauskoppeleinrichtung bzw. eine Prismenplatte oder Prismenfolie sein.

Gemäß einer Ausführungsform kann vorgesehen sein, daß eine oder mehrere erste Leuchten einen ausschließlich reflektierenden Dachreflektor aufweisen und eine oder mehrere zweite Leuchten einen teilweise lichtdurchlässigen Dachreflektor zur Auskopplung eines indirekten Lichtanteils aufweisen, wobei der Dachreflektor der ersten Leuchten so bemessen ist, daß er an bzw. in die Tragekonstruktion der zweiten Leuchten an- und/oder eingebaut werden kann und der Dachreflektor der zweiten Leuchten so bemessen ist, daß er an bzw. in die Tragekonstruktion der ersten Leuchten an- und/oder eingebaut werden kann.

Durch Austausch des Dachreflektors läßt sich also z.B. eine ausschließlich direkt strahlende Leuchte in eine indirekt strahlende Leuchte umwandeln und umgekehrt.

Es kann auch vorgesehen sein, daß zumindest zwei Leuchten des Systems einen Dachreflektor aufweisen, welcher jeweils so bemessen ist, daß er in der Tragekonstruktion der jeweils anderen Leuchte ein- oder angesetzt werden kann, wobei der Dachreflektor der einen Leuchte andere Reflexionseigenschaften als der Dachreflektor der anderen Leuchte, insbesondere hinsichtlich der Verteilung des reflektierten Lichts, aufweist.

Durch die Änderung der Reflexionseigenschaften eines Dachreflektors kann unter anderem die Lichtstärkeverteilung beeinflußt werden. Insbesondere lassen sich auf diese Weise asymmetrische Lichtstärkeverteilungen erreichen.

Gemäß einer Ausführungsform kann vorgesehen sein, daß zumindest zwei Leuchten des Systems jeweils in der Lichtauskoppeleinrichtung eine oder mehrere Platten mit einer lichtbrechenden Struktur als Bestandteil der Lichtauskoppeleinrichtung aufweisen, die so bemessen sind, daß sie in der Tragekonstruktion der jeweils anderen Leuchte ein- oder angesetzt werden können, wobei die Platten der einen Leuchte eine andere lichtbrechende Struktur als die Platten der anderen Leuchte aufweisen.

Statt einer Platte kann auch ein anderes flächenförmiges Element mit einer lichtbrechenden Struktur verwendet werden, z.B. eine Folie, wobei dieses Element vorzugsweise formstabil oder Bestandteil einer formstabilen Einheit sein sollte. Das nachfolgend betreffend Platten Gesagte gilt sinngemäß auch für Folien, auch wenn dies nicht ausdrücklich erläutert ist.

Die lichtbrechende Struktur kann z.B. in die Platten eingeformt sein oder in einer Folie ausgebildet sein, welche auf die Platte aufgebracht, z.B. aufgeklebt, ist.

Es ist also beispielsweise möglich, durch Austausch der Prismenplatte bzw. Prismenplatten (oder einer entsprechenden Folie) eine Leuchte mit einer Abschirmung für Bildschirmarbeitsplätze in eine Leuchte mit einer breitstrahlenden Lichtstärkeverteilung oder eine Leuchte mit einer asymmetrischen Lichtstärkeverteilung, einen Wallwasher, einen Ceilingwasher oder eine Wandleuchte umzuwandeln.

Es kann insbesondere vorgesehen sein, daß mindestens eine Platte der einen Leuchte dieselben für den Einbau oder Anbau in die Tragekonstruktion relevanten Maße wie eine Platte der anderen Leuchte aufweist und vorzugsweise dieselben Einbau- oder Anbaumaße aufweist.

Die Platten oder Folien mit der lichtbrechenden Struktur müssen nicht notwendigerweise unmittelbar an der Tragekonstruktion der jeweiligen Leuchte befestigt sein, sondern können beispielsweise auch mit einer Trageplatte verbunden sein, welche ihrerseits mit dem Gehäuse oder einer anderweitigen Tragekonstruktion verbunden ist. Die Abmessungen der Platte müssen dann eine Montage in einer entsprechenden Öffnung des Hohllichtleiters ermöglichen.

Insbesondere kann vorgesehen sein, daß die Platte oder Platten der einen Leuchte dieselbe Länge und Breite wie die Platte bzw. Platten der anderen Leuchte aufweisen.

Gemäß einer Ausführungsform der Erfindung kann auch vorgesehen sein, daß ein Einkoppelreflektor einer oder mehrerer erster Leuchten von einem Einkoppelreflektor einer oder mehrerer zweiter Leuchten verschieden und so bemessen ist, daß der Einkoppelreflektor der ersten Leuchten an bzw. in die Tragekonstruktion der zweiten Leuchten an- und/oder eingesetzt werden kann und umgekehrt.

Weiterhin kann vorgesehen sein, daß der Einkoppelreflektor der ersten Leuchten Licht vollständig in den Hohllichtleiter reflektiert und der Einkoppelreflektor der zweiten Leuchten Licht teilweise an dem Hohllichtleiter vorbei zur Abgabe eines indirekten Lichtanteils durchläßt oder reflektiert.

Die Ausgestaltung eines Reflektors, sei es eines Dachreflektors oder eines Einkoppelreflektors, zur Abgabe eines indirekten Lichtanteils kann auf verschiedene Weise erfolgen. Beispielsweise kann eine zweite Lichtauskoppeleinrichtung mit einer lichtbrechenden Struktur in dem Reflektor vorgesehen sein, welche teilweise Licht reflektiert und teilweise Licht auskoppelt. Der Reflektor kann auch Lochungen mit unterschiedlichen Abmessungen oder Flächen mit unterschiedlichen Transmissionseigenschaften aufweisen. Bei einem Einkoppelreflektor kann beispielsweise vorgesehen sein, daß er das Licht der Lampe durch eine sich in seiner Längsrichtung erstreckende Öffnung abgibt.

Bei einem besonderen Leuchtensystem ist vorgesehen, daß für eine Gruppe von Leuchten die Lichtauskoppelfläche, über welche Licht aus dem Hohllichtleiter ausgekoppelt wird, für mindestens zwei verschiedene Leuchten dieser Gruppe verschieden ist und zumindest für einen Teil der Leuchten der Gruppe die Lichtauskoppeleinrichtung mehrere nebeneinander angeordnete Platten aufweist, die jeweils mit einer Licht gerichtet ablenkenden lichtbrechenden Struktur, insbesondere einer eine Abschirmung erzeugenden lichtbrechenden Struktur versehen sind, wobei für alle Leuchten dieser Gruppe zumindest eine Platte mit einer Licht gerichtet ablenkenden lichtbrechenden Struktur dieselbe Grundform und dieselben relevanten Maße, z.B. Länge und Breite, wie eine entsprechende Platte aller anderen Leuchten der Gruppe aufweist.

Die besagte Gruppe kann insbesondere auch mit dem gesamten Leuchtensystem identisch sein, also alle Leuchten des Systems umfassen.

Dabei kann vorgesehen sein, daß alle Platten mit einer eine Licht gerichtet ablenkenden lichtbrechenden Struktur einer Leuchte der Gruppe die gleiche Grundform und die gleichen Abmessungen wie die Platten mit einer lichtbrechenden Struktur einer anderen, vorzugsweise aller anderen Leuchten der Gruppe haben.

Gemäß dieser Ausführungsform wird die Lichtauskoppeleinrichtung, die für verschiedene Leuchten verschiedene Abmessungen haben, zumindest teilweise aus standardisierten Platten augebaut. Vorzugsweise sind die Lichtaustrittsöffnungen ebenfalls derart standardisiert, daß sie aus einer gegebenen Anzahl von standardisierten, eine lichtbrechende Struktur tragenden Platten mit festen Abmessungen aufgebaut werden können. Dies wird sich allerdings nicht immer und für alle lichttechnischen Anwendungen des Leuchtensystems standardisieren lassen. Um Diskrepanzen zwischen den Maßen der standardisierten Platte und den Maßen der Lichtaustrittsfläche zu kompensieren, kann beispielsweise eine Prismenplatte bei der Montage beschnitten werden, so daß sich die vorgesehenen Prismenplatten insgesamt in die Lichtaustrittsöffnung einfügen.

Gemäß einer Ausführungsform kann auch vorgesehen sein, daß die Platte oder Platten voneinander oder von dem Gehäuse des Hohllichtleiters zumindest für eine Leuchte des Systems durch mehrere Abstandselemente, insbesondere Rahmen oder Rahmenelemente, getrennt sind, welche unterschiedliche Abmessungen aufweisen.

Auf diese Weise ist es möglich, Diskrepanzen zwischen den Maßen der vorgegebenen Lichtauskoppelfläche bzw. Lichtaustrittsfläche und den durch die standardisierten Platten vorgegebenen Maßen zu kompensieren. Beispielsweise kann, um diese Diskrepanz zu überbrücken, ein Rahmenelement zwischen zwei Platten eingesetzt werden, welches dicker als andere Rahmenelemente ist.

Alternativ ist es auch möglich, die standardisierten Platten auf einer Trägerplatte beabstandet voneinander zu montieren und die freibleibenden Bereiche der Trägerplatte, soweit dies für die gestellte lichttechnische Aufgabe erforderlich ist, z.B. durch Siebdruck, Lackieren oder Sandstrahlen derart zu gestalten, daß ein Lichtdurchtritt in den entsprechenden Bereichen behindert oder verhindert wird oder Licht in diesen Bereichen gestreut wird.

Die Erfindung stellt auch ein Verfahren zum Herstellen mehrerer Leuchten eines Leuchtensystems zur Verfügung, das aus mehreren Leuchten mit unterschiedlichen Lichtabstrahlungseigenschaften besteht, die jeweils mindestens einen Hohllichtleiter mit einem Hohlraum, in den von einer oder mehreren Lampen Licht eingestrahlt wird, und mindestens eine Lichtauskoppeleinrichtung zum Auskoppeln von Licht aus dem Hohllichtleiter zu einer Lichtaustrittsfläche aufweisen, wobei die Lichtauskoppeleinrichtung mindestens ein lichtdurchlässiges Element, z.B. eine Platte, mit einer Grenzfläche zwischen zwei Medien mit einem unterschiedlichen Brechungsindex aufweist, die mit einer lichtbrechenden Struktur versehen ist, welche in mindestens einer Ebene senkrecht zur Lichtaustrittsfläche Licht gerichtet ablenkt, derart, daß in dieser Ebene die Lichtstärkeverteilungskurve des an der Lichtaustrittsfläche austretenden Lichts beeinflußt wird, wobei die Leuchten eine Tragekonstruktion, insbesondere ein Gehäuse, aufweisen, an oder in welcher zumindest ein optisch wirksames Element, welches den Strahlengang des von der Lampe abgestrahlten Lichts beeinflußt, an- oder eingebaut ist, welches die folgenden Schritte umfaßt:

- Bereitstellen einer Tragekonstruktion für verschiedene Leuchten
- Bereitstellen mehrerer Exemplare eines optisch wirksamen Bauelements zum Beeinflussen des Strahlengangs des von der Lampe abgestrahlten Lichts, welches Maße aufweist, die mit jeder bereitgestellten Tragekonstruktion, vorzugsweise mit der Tragekonstruktion aller Leuchten des Systems kompatibel ist, so daß es in jeder der bereitgestellten Tragekonstruktionen ein- und/oder angebaut werden kann,
- Anbringen dieser Bauelemente in oder an den bereitgestellten Tragekonstruktionen verschiedener Leuchten.

Gemäß diesem Verfahren wird also ein standardisiertes Bauelement bei allen Leuchten montiert, wobei weitere, für verschiedene Leuchten verschiedene Bauelemente montiert werden können, um die unterschiedlichen lichttechnischen Eigenschaften herbeizuführen.

Das Bauelement kann insbesondere ein Einkoppelreflektor, eine Lichtauskoppeleinrichtung, eine Platte mit einer lichtbrechenden Struktur oder eine reflektierende Dachwand sein. Die Tragekonstruktion kann für mehrere der Leuchten identisch sein.

Weitere Schritte, um verschiedene Leuchtentypen innerhalb des Systems herzustellen, ergeben sich aus den vorangehend beschriebenen Leuchtentypen, die innerhalb eines Systems vorhanden sein können.

Die Erfindung stellt insbesondere auch ein Verfahren zum modularen Herstellen einer Leuchte zur Verfügung.

Gemäß einem Aspekt der Erfindung wird ein Verfahren zum Herstellen einer Leuchte, insbesondere einer Einbau-, Anbau-, Steh- oder Pendelleuchte, mit mindestens einem Hohllichtleiter, in den von einer oder mehreren Lampen Licht eingestrahlt wird, und mindestens einer Lichtauskoppeleinrichtung zum Auskoppeln von Licht aus dem Hohllichtleiter zu einer Lichtaustrittsfläche zur Verfügung gestellt, wobei die Lichtauskoppeleinrichtung mindestens eine Grenzfläche zwischen zwei Medien mit einem unterschiedlichen Brechungsindex aufweist, die mit einer lichtbrechenden Struktur versehen ist, welche in mindestens einer Ebene senkrecht zu der Lichtaustrittsfläche Licht gerichtet ablenkt, derart, daß in dieser Ebene die Lichtstärkeverteilungkurve des an der Lichtaustrittsfläche austretenden Lichts beeinflußt wird, wobei die Leuchte eine Tragekonstruktion, insbesondere ein Gehäuse aufweist, an dem ein oder mehrere vorgefertigte optisch wirksame Bauteile, welche den Strahlengang des von der Lampe abgestrahlten Lichts beeinflussen, angebracht werden und welche eine bestimmte Fläche zur Aufnahme dieser optisch wirksamen Bauteile festlegt, welches durch die folgenden Schritte gekennzeichnet ist:

- Bereitstellen einer oder mehrerer vorgefertigter optisch wirksamer Bauelemente mit vorgegebenen Abmessungen,
- Anordnen des oder der Bauelemente derart, daß die vorgegebene Fläche vollständig oder bis auf einen oder mehrere Bereiche ausgefüllt wird, deren Abmessungen kleiner als die Abmessungen des Bauelements sind,
- Befestigen der Bauelemente an der Tragekonstruktion entsprechend dieser Anordnung.

Bei dem Verfahren kann das Einfügen von einem oder mehreren Abstandselementen zwischen oder neben dem Bauelement oder den Bauelementen derart, daß die vorgegebene Fläche durch die Abstandselemente und das Bauelement bzw. die Bauelemente vollständig ausgefüllt wird, vorgesehen sein, wobei die Bauelemente und die Abstandselemente an der Tragekonstruktion derart befestigt werden, daß die vorgegebene Fläche ausgefüllt wird. Es kann insbesondere auch vorgesehen sein, daß zumindest zwei der Abstandselemente unterschiedliche Abmessungen besitzen,

Gemäß einer Ausführungsform kann vorgesehen sein, daß die Lichtauskoppeleinrichtung eine Lichtauskoppelfläche, über der Licht aus dem Hohllichtleiter ausgekoppelt wird, mit einer vorgegebenen Abmessung besitzt, gekennzeichnet durch die folgenden Schritte:

- Bereitstellen einer oder mehrerer lichtdurchlässiger Platten mit einer eine Abschirmung erzeugenden lichtbrechenden Struktur an einer Grundfläche,
- Anordnen der Platte oder Platten derart, daß eine vorgegebene Fläche, welche der Lichtauskoppelfläche entspricht, vollständig oder bis auf einen oder mehrere Bereiche ausgefüllt wird, deren Abmessungen kleiner als die Abmessungen der Platten sind, wobei neben oder zwischen den Platten Abstände zueinander oder zu dem Rand der vorgegebenen Fläche verbleiben können,
- Befestigen der Platten in einer Öffnung des Gehäuses des Hohllichtleiters in dieser Anordnung.

Die Erfindung kann das Einfügen von einem oder mehreren Abstandselementen zwischen oder neben der Platte oder den Platten derart, daß die vorgegebene Fläche durch die Platte bzw. Platten und die Abstandselemente vollständig ausgefüllt wird, sowie das Befestigen der Platten und der Abstandselemente in einer Öffnung des Gehäuses des Hohllichtleiters, derart, daß diese den Hohlraum des Hohllichtleiters begrenzen, und dabei insbesondere das Verbinden zumindest eines Teils der Abstandselemente und der Platte bzw. zumindest eines Teils der Platten mit einer darüberliegenden Platte zu einer Einheit vorsehen.

Die Abstandselemente können insbesondere Rahmenelemente sein, welche mehrere Platten zusammenhalten oder auch zum Abstützen einer einzigen Platte an dem Gehäuse des Hohllichtleiters oder an dem Leuchtengehäuse dienen können.

Es kann auch vorgesehen sein, daß zum Bilden der Lichtauskoppeleinrichtung mehrere Platten mit einer eine Abschirmung erzeugenden lichtbrechenden Struktur nebeneinander angeordnet werden, von denen mindestens zwei die gleiche Form und die gleichen Abmessungen aufweisen.

Die Erfindung beruht auf der überraschenden Erkenntnis, daß es in wesentlich größerem Umfang als bisher möglich ist, Innenraumleuchten aus standardisierten Teilen aufzubauen, wenn als lichttechnische Grundeinheit ein Hohllichtleiter verwendet wird. Dies liegt zum einen daran, daß Hohllichtleiter mit einer relativ geringen Bauhöhe realisiert werden können, die problemlos in Gehäuse von Leuchten für die verschiedensten lichttechnischen Anwendungen integriert werden kann. Die Auskopplung eines indirekten Lichtanteils kann bei einem Hohllichtleiter z.B. dadurch realisiert werden, daß eine Wand, z.B. die Dachwand, teilweise lichtdurchlässig ausgestaltet wird. Durch eine entsprechende Form des Dachreflektors kann auch die Form der Lichtstärkeverteilungskurve verändert werden, ohne die Abschirmbedingungen zu ändern. Als weiterer Vorteil tritt hinzu, daß zur Festlegung der Lichtstärkeverteilungskurve auf einer Lichtaustrittsfläche plattenförmige lichtbrechende Elemente verwendet werden, die, unabhängig von der gewünschten lichttechnischen Funktion, mit im wesentlichen denselben Abmessungen realisiert werden, und daher zwischen verschiedenen Leuchten ausgetauscht werden können. Beispielsweise kann eine Leuchte für Bildschirmarbeitsplätze durch den einfachen Austausch einer Prismenplatte in eine Leuchte mit einer asymmetrischen Lichtabstrahlcharakteristik umgewandelt werden. Ebenso lassen sich mit einem Hohllichtleiter weitere lichttechnische Elemente, beispielsweise Einkoppelreflektoren, leicht modulartig kombinieren.

Ein besonderer Aspekt der vorliegenden Erfindung ist die Möglichkeit, bestimmte lichttechnische Einrichtungen, beispielsweise die Lichtauskoppeleinrichtung, modulartig aus standardisierten Grundelementen aufzubauen.

Nachfolgend werden einige Eigenschaften von Leuchten, die insbesondere als Bestandteil des Leuchtensystems geeignet sind, noch näher erläutert.

Das erfindungsgemäße Leuchtensystem umfaßt insbesondere Leuchten, z.B. Einbau-, Anbauoder Pendelleuchten, bei denen die Lichtauskoppeleinrichtung mindestens eine Einheit mit mindestens zwei miteinander verbundenen, übereinander angeordneten Platten oder Folien aufweist bzw. aus einer solchen Einheit bzw. solchen Einheiten besteht, wobei diese Einheit in eine Öffnung des Gehäuses des Hohllichtleiters eingesetzt ist, so daß sie den Hohlraum des Hohllichtleiters begrenzt.

Gemäß einer Ausführungsform von Leuchten des Systems weist die Lichtauskoppeleinrichtung mehrere nebeneinander angeordnete Platten auf, die jeweils mit einer eine Abschirmung erzeugenden lichtbrechenden Struktur auf einer Grundfläche versehen sind.

Gemäß einer Ausführungsform kann vorgesehen sein, daß die Lichtauskoppeleinrichtung einer Leuchte mindestens einen Stapel von mindestens zwei Platten, vorzugsweise gleicher Grundfläche, aufweist, die jeweils mit einer lichtbrechenden Struktur zur Erzeugung einer Abschirmung versehen sind, wobei die lichtbrechende Struktur einer ersten Platte in einer ersten Ebene senkrecht zu der Lichtaustrittsfläche die Lichtauskopplung oberhalb eines Grenzwinkels zu der Senkrechten zu der Lichtaustrittsfläche im wesentlichen verhindert, in der die lichtbrechende Struktur einer zweiten Platte die Lichtabstrahlung nicht oder nur oberhalb eines größeren Grenzwinkels im wesentlichen verhindert, und die lichtbrechende Struktur der zweiten Platte in einer zweiten Ebene senkrecht zu der Lichtaustrittsfläche eine Lichtabstrahlung oberhalb eines Grenzwinkels zu einer Senkrechten zu der Lichtaustrittsfläche im wesentlichen verhindert, in welcher die erste Platte die Lichtauskopplung nicht oder nur oberhalb eines größeren Grenzwinkels im wesentlichen verhindert. Gemäß einer Ausführungsform der Erfindung kann insbesondere vorgesehen sein, daß die Lichtauskoppeleinrichtung mehrere derartige Stapel aufweist, die nebeneinander angeordnet sind, um die Lichtauskoppelfläche der Lichtauskoppeleinrichtung zu bilden.

Gemäß einer Ausführungsform kann vorgesehen sein, daß die lichtbrechende Struktur der Platten einer Lichtauskoppeleinrichtung linienförmige lichtbrechende Strukturelemente aufweist oder aus diesen besteht, welche Seitenwände im wesentlichen parallel zur Linienrichtung aufweisen, die an dem freien Ende der Strukturelemente einen Winkel einschließen, der für Leuchten mit Abschirmung größer als 90° ist, vorzugsweise in einem Bereich von 90° bis 130° liegt und gemäß einer besonderen Ausführungsform der Erfindung in einem Bereich von 110° bis 128° liegen kann. Die vorangehend angegebenen Winkelbereiche von 90° bis 130° bzw. 110° bis 128° sind besonders für Platten aus einem Material mit einem Brechungsindex von ungefähr 1,49 bevorzugt, können jedoch auch bei Materialien mit einem anderen Brechungsindex verwendet werden, der nicht allzusehr von 1,49 verschieden ist. Dies gilt für gängige Materialien wie Glas oder Polymethylmethacrylat. Grundsätzlich können allerdings für Materialien mit von 1,49 verschiedenem Brechungsindex die bevorzugten Winkelbereiche verschieden sein, wobei sich diese bevorzugten Winkelbereiche für diese Brechungsindizes dadurch ermitteln lassen, daß die gleichen Abschirmwinkel für einen vorgegebenen Grenzwert der Leuchtdichte erzielt werden wie in dem vorangehend angegebenen Winkelbereich von 90° bis 130° bzw. 110° bis 128° bei einem Brechungsindex von 1,49. Grundsätzlich sollte gemäß den bevorzugten Ausführungsformen dieser Winkel für Leuchten mit Abschirmung jedoch unabhängig vom Brechungsindex größer als 90° sein. Vorzugsweise ist dieser Winkel bei allen Strukturelementen gleich, die im übrigen auch alle die gleiche Querschnittsform und gegebenenfalls auch identische Abmessungen haben können. Für Leuchten ohne Abschirmung können andere Winkel zweckmäßig sein, wobei auch hier von 90° verschiedene Winkel bevorzugt sind.

Der Grenzwert der Leuchtdichte für eine Abschirmung kann entsprechend den geltenden Normen bzw. Normvorschlägen bei 200 cd/m$^2$, 500 cd/m$^2$ oder 1000 cd/m$^2$ liegen. Der Abschirmwinkel liegt bei gängigen Anwendungen im Bereich von mehr als 45°, bevorzugt in einem Bereich von 50° bis 75°, insbesondere 50° bis 65°.

Die lichtbrechenden Strukturelemente haben gemäß der bevorzugten Ausführungsform der Erfindung entlang der Linienrichtung einen konstanten Querschnitt, der insbesondere die Form eines Dreiecks annehmen kann. Die Seitenwände der Elemente müssen jedoch nicht eben sein, sondern können auch gekrümmt sein. Während gemäß einer bevorzugten Ausführungsform die Seitenwände an dem freien Ende der Strukturelemente direkt aneinander anschließen, kann auch vorgesehen sein, daß das freie Ende der Strukturelemente abgeflacht ist und die Seitenwände durch eine ebene oder gekrümmte Fläche verbunden sind. Im Fall von ebenen Seitenflächen oder Seitenflächen mit einem ebenen Abschnitt an dem freien Ende ist der vorangehend genannte Winkel dann durch die imaginäre Verlängerung der ebenen Seitenwände bzw. der ebenen Abschnitte der Seitenwände bestimmt. Im Fall von gekrümmten Seitenwänden kann der vorangehend erwähnte Winkel dem Winkel eines Dreiecks entsprechen, dem der Querschnitt der lichtbrechenden Elemente optimal, d.h. mit möglichst geringer Flächenabweichung zwischen der Fläche des Dreiecks und der Querschnittsfläche des lichtbrechenden Elements, einbeschrieben ist. Im Fall einer konvexen, d.h. nach außen gekrümmten Seitenwand, würde dieser Winkel durch den Schnittwinkel von zwei Tangenten gebildet, die an die Seitenlinien des Querschnitts des lichtbrechenden Elements angelegt werden, während im Fall einer konkaven, d.h. nach innen gekrümmten Seitenwand dieser Winkel durch zwei Geraden festgelegt würde, die jeweils zwischen dem Kopfpunkt und dem Fußpunkt mit einer Seitenlinie des Querschnitts, d.h. einer der Seitenwand im Querschnitt entsprechenden Linie, gelegt sind.

Gemäß einer Ausführungsform kann vorgesehen sein, daß in zwei übereinander angeordneten Platten oder Folien jeweils eine lichtbrechende Struktur mit linienförmigen Strukturelementen ausgebildet ist, wobei die Linien, welche die Geometrie der Struktur der ersten Platte definieren, mit den Linien, welche die Geometrie der Struktur der zweiten Platte definieren, einen nicht verschwindenden Winkel einschließen und vorzugsweise senkrecht auf diesen stehen.

Die lichtbrechenden Strukturen lassen sich z.B. dadurch herstellen, daß eine Platte oder Folie aus einem gängigen lichtdurchlässigen Material, wie Glas, Polyester, Polystyrol, Polycarbonat, PET oder Polymethylmethacrylat, auf einer Fläche entsprechend bearbeitet oder geformt wird. Alternativ kann auch eine Folie, welche die lichtbrechende Struktur enthält, auf eine solche Platte aufgeklebt werden.

Es kann auch vorgesehen sein, daß zumindest eine von mehreren übereinanderliegenden Platten zumindest abschnittsweise von einem oder mehreren Rahmenelementen, welche diese Platte übergreifen, an einer anderen Platte gehalten wird.

Um zu verhindern, daß bei einem ganz oder teilweise lichtdurchlässigen Rahmen in dem Bereich des Rahmens Licht ausgekoppelt wird, das nicht den Abschirmbedingungen genügt, kann auf der Lichtaustrittsseite der Lichtauskoppeleinrichtung der Bereich des Rahmens oder der Rahmenelemente lackiert, mit einem Siebdruck versehen, verspiegelt oder sandgestrahlt sein. Grundsätzlich kann dieser Bereich jedoch auch ganz oder teilweise lichtdurchlässig bleiben, nämlich dann, wenn die Lichtanteile mit einem Austrittswinkel oberhalb des Abschirmwinkels so klein sind, daß der Grenzwert für die mittlere Leuchtdichte der gesamten Lichtaustrittsfläche, einschließlich der Bereiche, in denen die lichtbrechenden Strukturen wirksam sind, nicht überschritten wird.

Gemäß einer bevorzugten Ausführungsform der Erfindung sind die Platten mit der eine Abschirmung erzeugenden lichtbrechenden Struktur auf einer Trägerplatte angeordnet, welche keine besonderen die Lichtstärkeverteilungskurve beeinflussenden Eigenschaften hat und vorzugsweise zwei parallele glatte Grundflächen aufweist.

Insbesondere kann vorgesehen sein, daß auf einer Trägerplatte mindestens zwei Platten mit einer eine Abschirmung erzeugenden lichtbrechenden Struktur nebeneinander angeordnet und mit der Trägerplatte verbunden sind.

Gemäß einer Ausführungsform kann vorgesehen sein, daß die mit einer eine Abschirmung erzeugenden lichtbrechenden Struktur versehenen Platten durch mindestens ein mit der Trägerplatte verbundenes Rahmenelement an dieser gehalten werden, welches eine oder mehrere der Platten mit einer lichtbrechenden Struktur übergreift.

Auf den nebeneinanderliegenden Platten können weitere Platten, insbesondere solche mit einer eine Abschirmung erzeugenden lichtbrechenden Struktur, angeordnet sein, so daß insgesamt auf der Trägerplatte mehrere Stapel von mindestens zwei Platten, die vorzugsweise jeweils eine eine Abschirmung erzeugende lichtbrechende Struktur aufweist, angeordnet sind und in geeigneter Weise, beispielsweise durch ein Rahmenelement oder einen Rahmen, an der Trägerplatte gehalten werden.

Gemäß einer besonderen Ausführungsform ist vorgesehen, daß zumindest zwei, vorzugsweise alle nebeneinander angeordneten strukturierten Platten dieselbe Form und dieselbe Grundfläche aufweisen.

Die Grundfläche der Platten kann insbesondere quadratisch sein.

Gemäß dieser Ausführungsform kann die Leuchte standardisiert werden, indem Platten mit einer lichtbrechenden Struktur verwendet werden, die fest vorgegebene Abmessungen haben. Diese Platten können dann in größerer Stückzahl und somit kostengünstiger hergestellt werden.

Weitere Merkmale und Vorteile der Erfindung ergeben sich aus der nachfolgenden detaillierten Beschreibung eines Ausführungsbeispiels anhand der beigefügten Zeichnungen.

Fig. 1    zeigt einen schematischen Querschnitt durch eine Leuchte eines erfindungsgemäßen Leuchtensystems,

Fig. 2    zeigt schematisch eine Draufsicht auf die Trägerplatte mit den darauf montierten Prismenplatten,

Fig. 3    zeigt schematisch einen vergrößerten Ausschnitt aus einem Querschnitt der Prismenplatten entlang der Linie III-III in Fig. 2,

Fig. 4    zeigt schematisch einen vergrößerten Ausschnitt aus einem Querschnitt der Prismenplatten entlang der Linie IV-IV in Fig. 2,

Fig. 5    zeigt einen teilweisen Querschnitt entlang der Linie V-V in Fig. 2,

Fig. 6    zeigt schematisch einen schematischen Querschnitt entlang der Linie VI-VI in Fig. 2,

Fig. 7    zeigt eine teilweise Draufsicht einer Ausführungsform einer zweiten Leuchte eines erfindungsgemäßen Leuchtensystems von unten,

Fig. 8    zeigt eine teilweise Draufsicht einer Ausführungsform einer dritten Leuchte eines erfindungsgemäßen Leuchtensystems von unten,

Fig. 9    zeigt eine teilweise Draufsicht einer Ausführungsform einer vierten Leuchte eines erfindungsgemäßen Leuchtensystems von unten

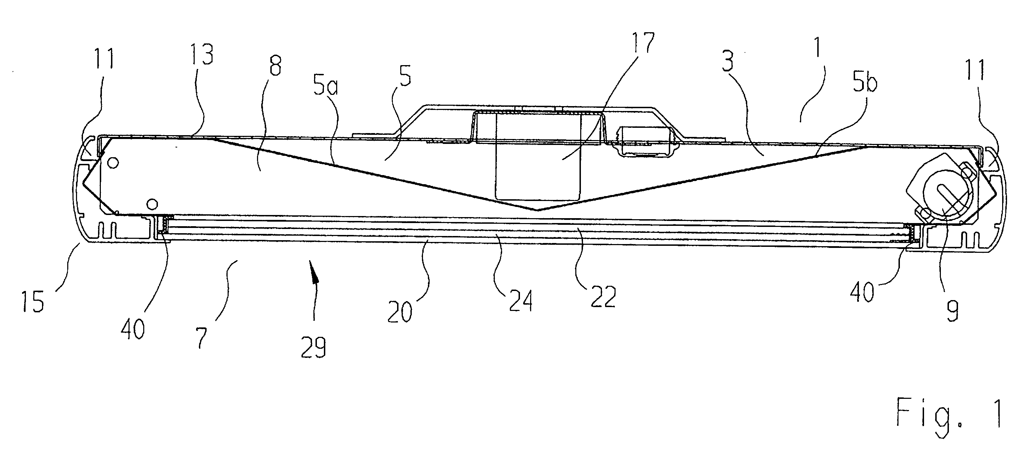

In Fig. 1 und 7 bis 9 sind schematisch vier verschiedene Leuchtentypen dargestellt, die Bestandteil eines erfindungsgemäßen Leuchtensystems sein können, wobei die erfindungsgemäßen Leuchtensysteme nicht auf Systeme mit den dargestellten Leuchten oder von Leuchten mit ähnlichen oder übereinstimmenden Eigenschaften beschränkt sind.

In Fig. 1 ist schematisch ein Beispiel einer Ausführungsform einer Leuchte eines erfindungsgemäßen Leuchtensystems dargestellt. Die Leuchte gemäß Fig. 1 weist ein allgemein mit 1 bezeichnetes Gehäuse auf, in dem ein allgemein mit 3 bezeichneter Hohllichtleiter angeordnet ist. Der Hohllichtleiter 3 besteht aus einer reflektierenden Dachwand 5 mit zwei in einem stumpfen Winkel zueinander geneigten Hälften 5a und 5b, reflektierenden Stirnwänden (nicht dargestellt) an den beiden Stirnseiten sowie einer Lichtauskoppeleinrichtung 7, die nachfolgend noch näher beschrieben wird. Die Stirnwände, die Dachwand 5 und die Lichtauskoppeleinrichtung 7 legen zusammen einen Hohlraum 8 mit reflektierenden Wänden fest.

Auf den beiden Schmalseiten ist der Hohllichtleiter 3 jeweils offen. An diese offenen Schmalseiten angrenzend ist jeweils eine Lampe 9 (nur auf einer Seite dargestellt) angeordnet, welche über einen Einkoppelreflektor 11 Licht in den Hohllichtleiter 3 einkoppelt.

Das Gehäuse 1 besteht aus einer oberen Gehäusehälfte 13, an welcher die Dachwand 5 befestigt ist, sowie einer den Hohllichtleiter und die Lichtauskoppeleinrichtung 7 von unten übergreifenden Seitenleiste 15, welche die Lichtauskoppeleinrichtung an dem Hohllichtleiter hält. An dem oberen Gehäuseteil 13 ist ein Vorschaltgerät 17 befestigt, welches sich in den Bereich oberhalb des Hohllichtleiters 3 erstreckt, in dem die beiden Dachhälften 5a und 5b einen verringerten Abstand zu der Lichtauskoppeleinrichtung 7 haben und dementsprechend oberhalb des Hohllichtleiters 3 einen vergrößerten Raumbereich in dem Gehäuse festlegen, so daß insgesamt eine relativ geringe Bauhöhe erreicht werden kann, was insbesondere bei Anbauoder Pendelleuchten von Vorteil ist.

Die Lichtauskoppeleinrichtung besteht aus einer Trägerplatte 20, auf der zwei Paare von übereinander angeordneten quadratischen Prismenplatten 22 und 24 bzw. 26 und 28 angeordnet sind. Die Trägerplatte bildet die Lichtauskoppelfläche der Lichtauskoppeleinrichtung 7, die im Fall dieser Leuchte mit der Lichtaustrittsfläche 29 zusammenfällt. Die Prismenplatten sind auf einer Grundfläche mit einer Prismenstruktur versehen, welche eine Abschirmung des über die Lichtauskoppeleinrichtung austretenden Lichts erzeugt und welche nachfolgend für die Prismenplatten 22 und 24 genauer erläutert wird.

Die Prismenplatten 22 und 24 sind mit einer Struktur versehen, welche eine Lichtauskopplung oberhalb eines Grenzwinkels zu der Senkrechten zu der Lichtaustrittsfläche in bestimmten Ebenen im wesentlichen verhindert und dadurch eine Abschirmung, d.h. eine Absenkung der mittleren Leuchtdichte der Lichtaustrittsfläche unter einen Grenzwert, z.B. 200 cd/m$^2$, 500 cd/m$^2$ oder 1000 cd/m$^2$, erzeugt, wie er von den geltenden Normen bzw. Normvorschlägen für Bildschirmarbeitsplätze gefordert wird.

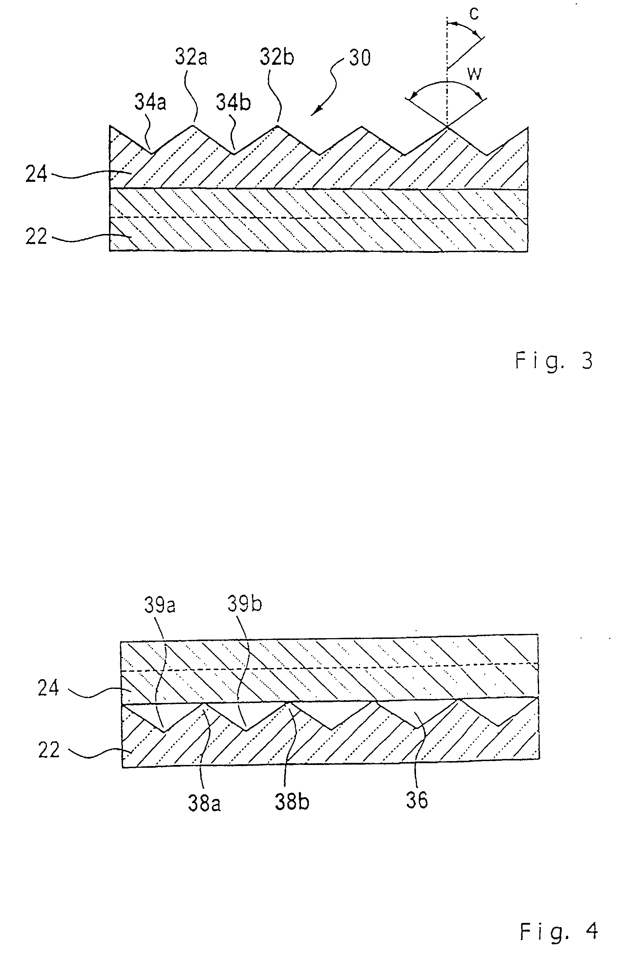

Die Prismenplatte 24 weist auf ihrer von dem Hohlraum 8 abgewandten Seite eine Struktur von parallelen Prismen 30 auf, die in einem Querschnitt senkrecht zu ihrer Längsachse eine dreieckige Form besitzen, wie man anhand von Fig. 3 erkennen kann. Fig. 3 zeigt, daß die Prismen unmittelbar aneinander angrenzen, gleichmäßig voneinander beabstandete Grate 32a, 32b, ... (nachfolgend kollektiv mit 32 bezeichnet) aufweisen und durch gleichmäßig voneinander beabstandete Vertiefungen 34a, 34b, ..., nachfolgend kollektiv mit 34 bezeichnet, voneinander getrennt sind. Die Vertiefungen 34 und die Grate 32 bilden auf der von dem Hohlraum 8 abgewandten Seite der Platte 24 gerade parallele Linien.

Die Abschirmung kann z.B. durch Totalreflexion in den Prismen erzeugt werden. Licht in den Prismen wird beim Einfall auf die Grenzfläche zu einem optisch dünneren Medium, z.B. Luft, vollständig in die Prismen zurückreflektiert, wenn der Einfallswinkel größer als der Winkel der Totalreflexion ist. Dementsprechend ist der Austrittswinkel, bezogen auf die Grenzflächen der Prismen, begrenzt. Die Seitenwände der Prismen zwischen den Graten 32 und den Vertiefungen 34 stehen jedoch schräg zu der Lichtaustrittsfläche, so daß die Begrenzung des Lichtaustrittswinkels durch den Grenzwinkel der Totalreflexion nicht notwendigerweise eine Abschirmung bedeutet. Ein mögliches Kriterium für eine Abschirmung läßt sich dadurch ableiten, daß für Strahlengänge in den Prismen bis zu einer vorgegebenen Höchstzahl k (z.B. k = 1, 2, 3 oder 4) von inneren Reflexionen in den Prismen vor einem Lichtaustritt aus der Struktur der Austrittswinkel bezüglich einer Senkrechten zu der Grundfläche der lichtbrechenden Struktur maximal gleich dem Abschirmwinkel ist. Andere Abschirmmechanismen oder Abschirmkriterien können alternativ oder ergänzend auch verwendet werden.

Es hat sich gezeigt, daß für Prismen mit einem Querschnitt in der Form eines gleichschenkligen Dreiecks eine gute Abschirmung erreicht wird, wenn zwischen dem Abschirmwinkel C und dem Prismenwinkel w für eine Grenzfläche zu Luft die folgenden Relationen bestehen:

$$w/2 \leq C \tag{1}$$

$$w \geq 2 \, (2 \, \arcsin(1/n) + 90)/3 \tag{2}$$

$$\tan(w/2) \leq (n \, \sin(\arcsin(1/n) - 3 \, w/2) + \cos(w/2)) \, / \, (n \, \cos(\arcsin(1/n) - 3 \, w/2) +$$

$$\sin(w/2)), \tag{3}$$

wobei n der Brechungsindex der Platte 24 ist.

Der Prismenwinkel w liegt bei den derzeitig bevorzugten Ausführungsformen bei einem Brechungsindex von 1,49 im Bereich von 90° bis 130°, besonders bevorzugt im Bereich von 110° bis 128°.

Anstelle der in Fig. 3 dargestellten dreieckförmigen Prismen können auch andere Prismenformen verwendet werden.

Die Prismenplatte 22 ist wie die Platte 24 mit einer Struktur von parallelen geradlinigen Prismen 36 versehen, welche Grate 38a, 38b, ... (nachfolgend kollektiv mit 38 bezeichnet) aufweisen und durch Vertiefungen 39a, 39b, ... (nachfolgend mit 39 bezeichnet) voneinander getrennt sind. Ebenso wie die Prismen 30 erzeugen die Prismen 36 in der Richtung quer zu ihrer Längsrichtung eine Abschirmung, wobei insbesondere die Relationen (1) bis (3) erfüllt sein können. Wie man anhand von Fig. 3 und 4 erkennt, ist die Längsrichtung der Prismen 30 senkrecht zu der Längsrichtung der Prismen 36. Die Prismenplatten 18 und 20 erzeugen daher zusammen eine Abschirmung in zueinander senkrechten Ebenen, die senkrecht auf der Lichtaustrittsfläche 3 stehen. Auf diese Weise wird eine Abschirmung in mindestens zwei Ebenen erzeugt. Der Abschirmwinkel C kann in diesen beiden Ebenen verschieden sein. Dementsprechend können die Prismen 30 und 36 auch einen verschiedenen Prismenwinkel w aufweisen. Der Vollständigkeit halber sei angemerkt, daß die dargestellten Prismen auch eine Abschirmung in Ebenen zwischen den beiden Ebenen senkrecht zu der jeweiligen Längsrichtung erzeugen können. Ähnliches kann auch für andere Prismenformen gelten.

Die Prismenplatten 26 und 28 haben denselben Aufbau wie die Prismenplatten 22 und 24 und sind in identischer Weise zueinander ausgerichtet. Die Prismen der Platte 22 liegen parallel zu denen der Platte 26 und diejenigen der Platte 24 parallel zu denjenigen der Platte 28.

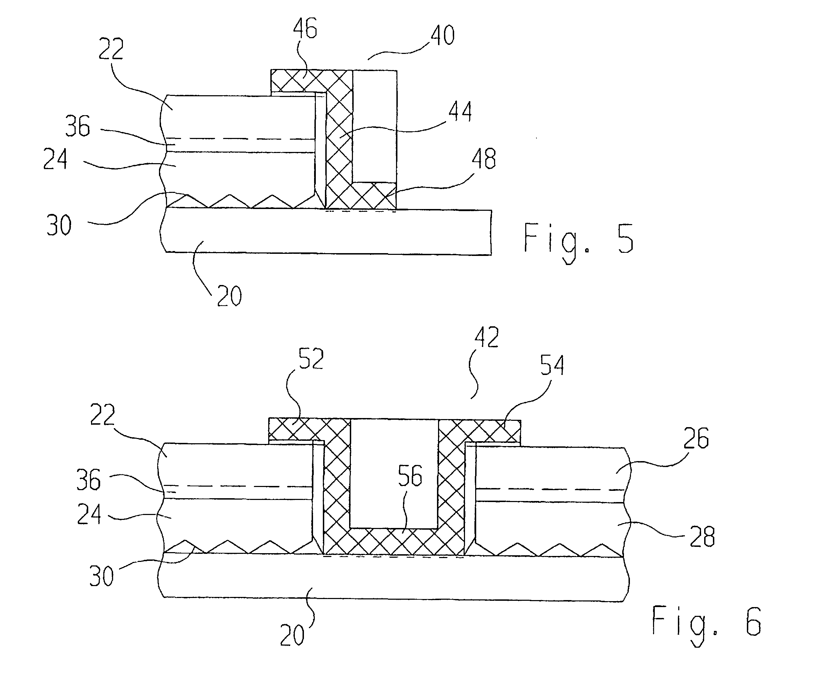

Die Prismenplatten 22 und 24 bzw. 26 und 28 sind durch Rahmenelemente 40 und 42 an der Trägerplatte 20 gehalten. Die Art der Verbindung ist in Fig. 5 und 6 im Detail dargestellt. An den äußeren Seiten ist zur Befestigung der Prismenplatten ein Rahmenelement 40 vorgesehen, welches einen zentralen Abschnitt 44 aufweist, an den sich an den beiden Enden Flansche 46 und 48 rechtwinklig anschließen, die in entgegengesetzte Richtungen weisen. Der Flansch 48 ist auf der Platte 20 aufgeklebt. Der Flansch 46 übergreift die Platten 22 und 24 (bzw. 26 und 28) und hält diese dadurch formschlüssig an der Trägerplatte 20.

Im Inneren der Lichtauskoppelfläche im Bereich zwischen den Paaren von Platten 22 und 24 bzw. 26 und 28 ist ein U-förmiges Rahmenelement 42 vorgesehen, welches an seinem offenen Ende auf einander gegenüberliegenden Seiten zwei rechtwinklig anschließende Flansche 52 und 54 aufweist, die sich in entgegengesetzte Richtungen erstrecken. Die Basisfläche 56 des Rahmenelements 42 ist an der Trägerplatte 20 festgeklebt, während die Flansche 52 und 54 die Platten 22 und 24 bzw. 26 und 28 übergreifen. Insgesamt bilden drei Rahmenelemente 40 zusammen mit dem zentralen Rahmenelement 42 einen Rahmen für die beiden Platten 22 und 24, welcher diese Platten formschlüssig an der Trägerplatte hält, und drei weitere Rahmenelemente 40 bilden zusammen mit dem Rahmenelement 42 einen Rahmen für die beiden Prismenplatten 26 und 28, der diese Prismenplatten an der Trägerplatte 20 hält. Insgesamt bilden die Trägerplatte 20, die Prismenplatten 22 bis 28 sowie die Rahmenelemente 40 und 42 eine vorgefertigte Einheit, welche in die Öffnung des Hohllichtleiters 3 eingesetzt und durch die Seitenleisten 15 an dem Hohllichtleiter gehalten wird. Die Platten und die zugehörigen Prismenstrukturen sind dabei durch die Rahmen 40 und 42 und die Fixierung an der Trägerplatte 20 korrekt zueinander ausgerichtet.

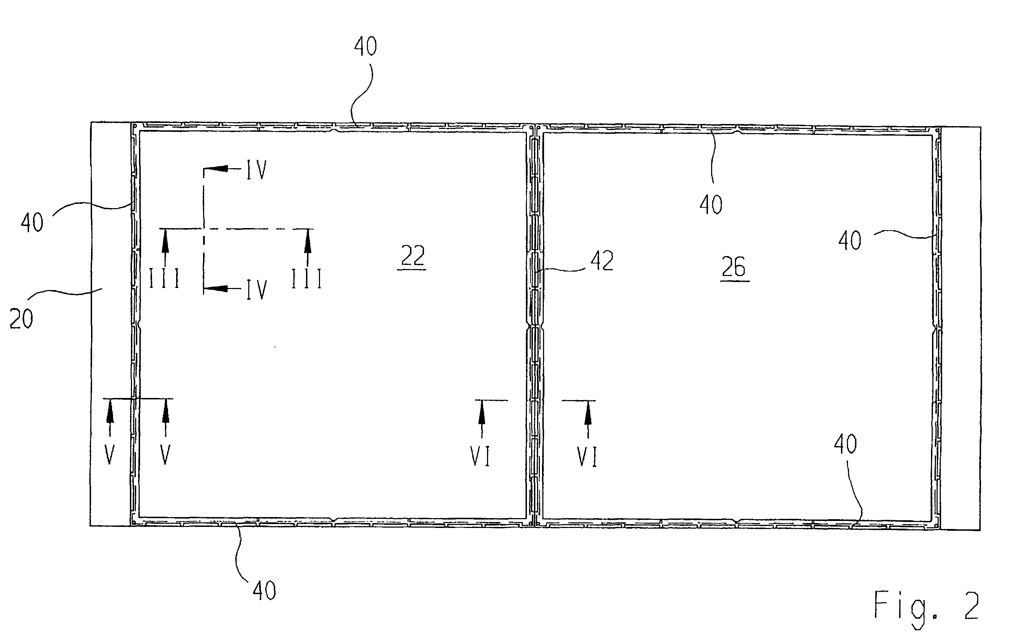

Zur Herstellung der Lichtauskoppeleinrichtung 7 werden die Rahmenelemente 40 und 42 entsprechend der Geometrie der Fig. 2 mit den Flanschelementen 46 bzw. 52 und 54 nach unten ausgelegt und anschließend die Prismenplatten 22 und 24 bzw. 26 und 28 auf die Flansche 46, 52 und 54 aufgelegt, so daß die Rahmenelemente 40 und 42 die Prismenplatten im wesentlichen spielfrei halten. Anschließend wird die Trägerplatte 20 aufgelegt und mit den Flanschen 48 bzw. dem Basisabschnitt 56 verklebt. Man beachte, daß die Prismenstrukturen der Platten 22 bis 28 im Inneren der Lichtauskoppeleinrichtung 7 liegen. Auf diese Weise entsteht eine Einheit, welche auf beiden Seiten eine glatte, leicht zu reinigende Oberfläche aufweist und bei welcher die Prismenstrukturen durch die Rahmenelemente 40 und 42 sowie die Trägerplatte 20 abgeschlossen sind. Vorzugsweise wird der innere Bereich der Lichtauskoppeleinrichtung, in welchem die Prismenstrukturen vorhanden sind, dicht abgeschlossen, so daß Staub oder andere Verunreinigungen nicht in den Bereich der Prismenstrukturen vordringen können. Hierzu kann zwischen dem Flansch 46 bzw. den Flanschen 52 und 54 und der darunterliegenden Prismenplatte eine Dichtung (nicht dargestellt) vorgesehen sein, welche den Spalt zwischen dem Rahmen und den Prismenplatten abdichtet. Auf der gegenüberliegenden Seite ist die Einheit durch die Klebeverbindung mit der Trägerplatte 20 dicht verschlossen.

Das Licht von der Lampe 9 bzw. dem Einkoppelreflektor 11 fällt zu einem Teil direkt auf die Platten 22 und 26 ein. Ein Teil dieses Lichts tritt durch die Platten 22 und 24 bzw. 26 und 28 hindurch und an der Lichtaustrittsfläche 29 aus. Ein weiterer Teil des Lichts wird an den Platten 22 und 26 reflektiert. Die Dachwand 5 reflektiert das auf sie direkt von der Lampe 9 bzw. dem Einkoppelreflektor 11 einfallende Licht sowie das zu ihr von der Platte 22 bzw. 26 zurückreflektierte Licht nach unten zu der Lichtauskoppeleinrichtung 7.

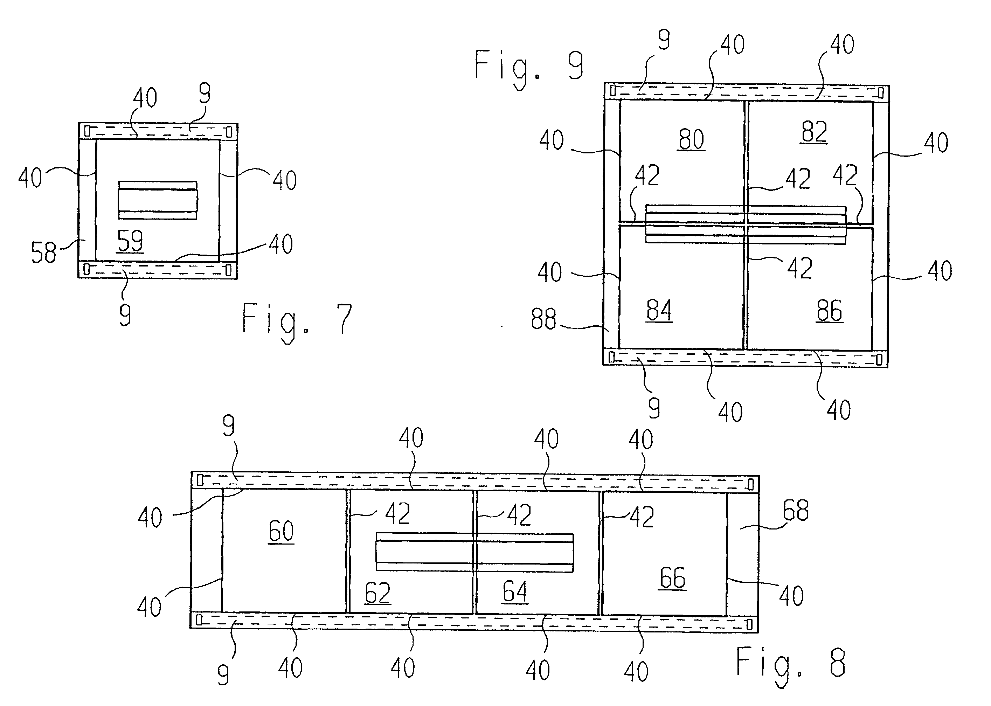

Fig. 7 bis 9 zeigen weitere Leuchten, die Bestandteil eines erfindungsgemäßen Leuchtensystems sein können. Diese Leuchten haben den gleichen Aufbau wie die in Fig. 1 gezeigte Leuchte, der daher nicht noch einmal erläutert wird, und unterscheiden sich lediglich durch die Ausgestaltung der Lichtauskoppeleinrichtung 7. Gleiche Bestandteile sind mit den gleichen Bezugszeichen bezeichnet.

Bei der Ausführungsform gemäß Fig. 7 ist auf einer Trägerplatte 58 ein Paar von übereinanderliegenden Prismenplatten 59, von denen nur die obere Platte in Fig. 7 sichtbar ist, durch Rahmenelemente 40 gehalten, wie sie vorangehend mit Bezug auf Fig. 4 beschrieben wurden. Diese Ausführungsform ist für die Verwendung von relativ kurzen Leuchtstofflampen, etwa den standardmäßigen 8W-Leuchtstofflampen, vorgesehen.

Bei dem Ausführungsbeispiel gemäß Fig. 8 sind vier Paare von Prismenplatten 60, 62, 64 und 66 wie vorangehend mit Bezug auf Fig. 1 bis 6 beschrieben auf einer Trägerplatte 68 befestigt, wobei die äußeren Ränder der Prismenplatten durch die vorangehend beschriebenen Rahmenelemente 40 und die inneren Ränder der Prismenplatten durch die vorangehend beschriebenen Rahmenelemente 42 an der Trägerplatte 68 gehalten werden. Vorzugsweise sind die Rahmenelemente 40 und 42 mit der Trägerplatte 68 verklebt. Eine solche Ausführungsform könnte beispielsweise mit zwei standardmäßigen 21W-Leuchtstofflampen betrieben werden, die jeweils an einer offenen Schmalseite des Hohllichtleiters 3 angeordnet sind.

Fig. 9 zeigt eine Ausführungsform der Erfindung, bei welcher der Abstand zwischen den Lampen 9 vergrößert ist. Vier Paare von Prismenplatten 80, 82, 84 und 86, die wie die vorangehend beschriebenen Prismenplattenpaare 22 und 24 bzw. 26 und 28 ausgebildet sind, sind in der vorangehend beschriebenen Weise mit Rahmenelementen 40 bzw. 42 auf einer Trägerplatte 88 befestigt. Statt vier individuellen Rahmenelementen 42 kann auch ein kreuzförmiges Rahmenelement verwendet werden, dessen vier Arme im Querschnitt wie die Rahmenelemente 42 ausgebildet sind und welches die Funktion der vier Rahmenelemente 42 in einem Bauteil vereint. Diese Leuchte könnte beispielsweise mit zwei 24W-Leuchtstofflampen betrieben werden.

Die verschiedenen Ausführungsformen der Leuchte, beispielsweise die Ausführungsformen gemäß Fig. 1 und 2 und 7 bis 9, bilden Bestandteile eines Leuchtensystems, das Leuchten für verschieden dimensionierte und dementsprechend auch verschieden lange Leuchtstofflampen umfaßt, wobei sämtliche bei diesem System verwendeten Prismenplatten, also die Prismenplatten 22 und 28 und die Prismenplatten der Paare 52, 60 bis 66 und 80 bis 86, dieselben Abmessungen haben. Für verschiedene Leuchten des Systems werden zwei, drei, vier oder mehr Prismenplatten hintereinander in der Längsrichtung der Lampen (vgl. Fig. 2 und 8) und/oder in der Richtung quer zu der Längsrichtung der Lampen (vgl. Fig. 9) mit Hilfe von Rahmenelementen 40 und 42 auf einer Trägerplatte aneinandergesetzt und mit dieser verbunden, so daß eine zusammengesetzte Lichtaustrittsfläche entsteht.

Dies ist für eine rationale Fertigung mit hohen Stückzahlen von Vorteil, da die Prismenplatten nicht für jeden Leuchtentyp gesondert angefertigt werden müssen, sondern vielmehr ein standardisierter Plattentyp verwendet werden kann.

Während das vorangehend beschriebene Leuchtensystem darauf beruhte, daß Prismenplatten gleicher Abmessung für Leuchten verschiedener Länge oder Breite verwendet wurden, kann ein erfindungsgemäßes Leuchtensystem alternativ oder ergänzend auch auf anderen Grundelementen aufgebaut sein. Beispielsweise können alle Leuchten eines erfindungsgemäßen Leuchtensystems Prismenplatten mit den gleichen Abmessungen, aber jeweils unterschiedlicher lichtbrechender Struktur aufweisen, so daß die lichtlenkenden Eigenschaften und insbesondere die Abschirmungseigenschaften jeweils verschieden sind. Eine Leuchte des Systems ergibt sich also dadurch aus einer anderen Leuchte, daß die entsprechende Prismenplatte ausgetauscht wird. Ebenso kann ein System darauf aufgebaut sein, daß die gleiche Trägerkonstruktion oder das gleiche Gehäuse verwendet wird und die verschiedenen eingesetzten lichttechnischen Komponenten, wie Lampen, Einkoppelreflektoren, Prismenplatten, Dachreflektoren usw. verschieden sind. Ebenso kann eine weitere Eigenschaft des erfindungsgemäßen Leuchtensystems darin liegen, daß standardisierte Dachreflektoren oder Einkoppelreflektoren verwendet werden, die jeweils für verschiedene Leuchten verschiedene lichttechnische Eigenschaften haben. Beispielsweise kann eine Leuchte des Leuchtensystems einen Dachreflektor mit zwei nach innen geneigten ebenen Flächen aufweisen, wie in Fig. 1 gezeigt, eine weitere Leuchte des Systems einen Dachreflektor mit gleicher Länge und Breite, aber mit einer oder mehreren gekrümmten Flächen, eine dritte Leuchte einen Dachreflektor mit derselben Länge und Breite, der vollständig eben ist, usw. Selbstverständlich können auch mehrere der vorangehend genannten Konstruktionsprinzipien kombiniert werden. Beispielsweise kann ein austauschbarer Dachreflektor aus mehreren Modulen vorgegebener Länge, die zu Dachreflektoren von unterschiedlicher Länge kombinierbar sind, zusammen mit einer Lichtauskoppeleinrichtung verwendet werden, die, wie vorangehend erläutert, aus mehreren standardisierten Prismenplatten aufgebaut ist.

Bezugszeichenliste

| | |
|---|---|
| 1 | Gehäuse |
| 3 | Hohllichtleiter |
| 5 | Dachwand |
| 5a, 5b | Hälften der Dachwand |
| 7 | Lichtauskoppeleinrichtung |
| 8 | Hohlraum |
| 9 | Lampe |
| 11 | Einkoppelreflektor |
| 13 | obere Gehäusehälfte |
| 15 | Seitenleiste |
| 17 | Vorschaltgerät |
| 20 | Trägerplatte |
| 22 | Prismenplatte |

| 24 | Prismenplatte |
|---|---|
| 26 | Prismenplatte |
| 28 | Prismenplatte |
| 29 | Lichtaustrittsfläche |
| 30 | Prisma |
| 32, 32a, 32b | Prismengrat |
| 34, 34a, 34b | Vertiefung |
| 36 | Prisma |
| 38, 38a, 38b | Prismengrat |
| 39, 39a, 39b | Vertiefung |
| 40 | Rahmenelement |
| 42 | Rahmenelement |
| 44 | zentraler Abschnitt |
| 46 | Flansch |
| 48 | Flansch |
| 52 | Flansch |
| 54 | Flansch |
| 56 | Basisfläche |
| 58 | Trägerplatte |
| 59 | Prismenplattenpaar |
| 60 | Prismenplattenpaar |
| 62 | Prismenplattenpaar |
| 64 | Prismenplattenpaar |
| 66 | Prismenplattenpaar |
| 68 | Trägerplatte |
| 80 | Prismenplattenpaar |
| 82 | Prismenplattenpaar |
| 84 | Prismenplattenpaar |
| 86 | Prismenplattenpaar |
| 88 | Trägerplatte |

## Patentansprüche

1. Leuchtensystem, bestehend aus mehreren Leuchten mit unterschiedlichen Lichtabstrahlungseigenschaften, insbesondere Steh-, Einbau-, Anbau- und/oder Pendelleuchten, welche jeweils mindestens einen Hohllichtleiter (3) mit einem Hohlraum (8), in den von einer oder mehreren Lampen (9) Licht eingestrahlt wird, und mindestens eine Lichtauskoppeleinrichtung (7) zum Auskoppeln von Licht aus dem Hohllichtleiter (3) zu einer Lichtaustrittsfläche (29) aufweisen, wobei die Lichtauskoppeleinrichtung (7) mindestens ein lichtdurchlässiges Element (22, 24, 26, 28) mit einer Grenzfläche zwischen zwei Medien mit einem unterschiedlichen Brechungsindex aufweist, die mit einer lichtbrechenden Struktur (30, 36) versehen ist, welche in mindestens einer Ebene senkrecht zur Lichtaustrittsfläche Licht gerichtet ablenkt, derart, daß in dieser Ebene die Lichtstärkeverteilungskurve des an der Lichtaustrittsfläche austretenden Lichts beeinflußt wird, wobei die Leuchten eine Tragekonstruktion (1) aufweisen, an oder in welcher zumindest ein optisch wirksames Element (5, 7, 11, 22, 24, 26, 28), welches den Strahlengang des von der Lampe abgestrahlten Lichts beeinflußt, angebracht ist, **dadurch gekennzeichnet, daß** bei jeder Leuchte zumindest ein optisch wirksames Bauelement (5, 7, 11, 22, 24, 26, 28), welches den Strahlengang des von der Lampe (9) abgestrahlten Lichts beeinflußt, insbesondere ein reflektierendes oder lichtbrechendes Element, ein vorgefertigtes Bauelement ist, das so bemessen ist, daß es an bzw. in jeder Tragekonstruktion (1) einer Leuchte des Systems als optisch wirksames Element an- und/oder eingebaut werden kann.

2. Leuchtensystem nach Anspruch 1, **dadurch gekennzeichnet, daß** bei jeder Leuchte zumindest ein Dachreflektor (5), ein Element der Lichtauskoppeleinrichtung (7) mit einer lichtbrechenden Struktur und/oder ein Einkoppelreflektor (11) ein vorgefertigtes Bauelement ist, das so bemessen ist, daß es an bzw. in jeder Tragekonstruktion (1) einer Leuchte des Systems an- und/oder eingebaut werden kann.

3. Leuchtensystem nach Anspruch 2, **dadurch gekennzeichnet, daß** für alle Leuchten des Systems zumindest ein mit einer lichtbrechenden Struktur versehenes Element (22, 24, 26, 28) der Lichtauskoppeleinrichtung, ein Dachreflektor (5) und/oder ein Einkoppelreflektor (11) hinsichtlich der für den Einbau bzw. Anbau. in die Tragekonstruktion relevanten Maße im wesentlichen gleich ist.

4. Leuchtensystem nach einem der Ansprüche 1 bis 3, **dadurch gekennzeichnet, daß** eine oder mehrere erste Leuchten einen ausschließlich reflektierenden Dachreflektor (5) aufweisen und eine oder mehrere zweite Leuchten einen teilweise lichtdurchlässigen Dachreflektor (5) zur Auskopplung eines indirekten Lichtanteils aufweisen, wobei der Dachreflektor (5) der ersten Leuchten so bemessen ist, daß er an bzw. in die Tragekonstruktion (1) der zweiten Leuchten an- und/oder eingebaut werden kann und der Dachreflektor (5) der zweiten Leuchten so bemessen ist, daß er an bzw. in die Tragekonstruktion (1) der ersten Leuchten an- und/oder eingebaut werden kann.

5. Leuchtensystem nach einem der Ansprüche 1 bis 4, **dadurch gekennzeichnet, daß** zumindest zwei Leuchten des Systems einen Dachreflektor (5) aufweisen, welcher jeweils so bemessen ist, daß er in der Tragekonstruktion (1) der jeweils anderen Leuchte ein- oder angesetzt werden kann, wobei der Dachreflektor (5) der einen Leuchte andere Reflexionseigenschaften als der Dachreflektor (5) der anderen Leuchte aufweist.

6. Leuchtensystem nach einem der Ansprüche 1 bis 5, **dadurch gekennzeichnet, daß** zumindest zwei Leuchten des Systems jeweils in der Lichtauskoppeleinrichtung eine oder mehrere flächenförmige Elemente (22, 24, 26, 28; 59; 60, 62, 64, 66; 80, 82, 84, 86) mit einer lichtbrechenden Struktur als Bestandteil der Lichtauskoppeleinrichtung (7) aufweisen, die so bemessen sind, daß sie in der Tragekonstruktion der jeweils anderen Leuchte ein- oder angesetzt werden können, wobei die besagten flächenförmigen Elemente der einen Leuchte eine andere lichtbrechende Struktur als die besagten flächenförmigen Elemente der anderen Leuchte aufweisen.

7. Leuchtensystem nach Anspruch 6, **dadurch gekennzeichnet, daß** das oder die flächenförmigen Elemente (22, 24, 26, 28; 59; 60, 62, 64, 66; 80, 82, 84, 86) der einen Leuchte dieselbe Länge und Breite wie die das oder die flächenförmigen Elemente (22,24,26,28; 59; 60, 62, 64, 66; 80, 82, 84, 86) der anderen Leuchte aufweisen.

8. Leuchtensystem nach einem der Ansprüche 1 bis 7, **dadurch gekennzeichnet, daß** ein Einkoppelreflektor einer oder mehrerer erster Leuchten von einem Einkoppelreflektor (11) einer oder mehrerer zweiter Leuchten verschieden und so bemessen ist, daß der Einkoppelreflektor der ersten Leuchten an bzw. in die Tragekonstruktion (1) der zweiten Leuchten an- und/oder eingesetzt werden kann und umgekehrt.

9. Leuchtensystem nach Anspruch 8, **dadurch gekennzeichnet, daß** der Einkoppelreflektor (11) der ersten Leuchten Licht vollständig in den Hohllichtleiter reflektiert und der Einkoppelreflektor (11) der zweiten Leuchten Licht teilweise an dem Hohllichtleiter vorbei zur Abgabe eines indirekten Lichtanteils durchläßt oder reflektiert.

10. Leuchtensystem nach einem der Ansprüche 1 bis 9, **dadurch gekennzeichnet, daß** mehrere Leuchten dieselbe Tragekonstruktion (1) aufweisen und sich jeweils durch ein oder mehrere an der Tragekonstruktion befestigte optisch wirksame Bauelemente (5, 7, 11, 22, 24, 26, 28), welche jeweils dieselben für den Ein- oder Anbau relevanten Maße haben, aber unterschiedliche lichttechnische Eigenschaften aufweisen, unterscheiden.

11. Leuchtensystem nach einem der Ansprüche 1 bis 10, **dadurch gekennzeichnet, daß** für eine Gruppe von Leuchten die Lichtauskoppelfläche, über welche Licht aus dem Hohllichtleiter (3) ausgekoppelt wird, für mindestens zwei verschiedene Leuchten dieser Gruppe verschieden ist und zumindest für einen Teil der Leuchten der Gruppe die Lichtauskoppeleinrichtung (7) mehrere nebeneinander angeordnete flächenförmige Elemente (22, 24, 26, 28; 59; 60, 62, 64, 66; 80, 82, 84, 86) aufweist, die jeweils mit einer Licht gerichtet ablenkenden lichtbrechenden Struktur (30, 36) versehen sind, wobei für alle Leuchten dieser Gruppe zumindest ein flächenförmiges Element mit einer Licht gerichtet ablenkenden Struktur dieselbe Grundform und dieselben relevanten Maße wie ein entsprechendes Element aller anderen Leuchten der Gruppe aufweist.

12. Leuchtensystem nach Anspruch 11, **dadurch gekennzeichnet, daß** alle flächenförmigen Elemente (22, 24, 26, 28; 59; 60, 62, 64, 66; 80, 82, 84, 86) mit lichtbrechenden Struktur einer Leuchte der Gruppe die gleiche Grundform und die gleichen Maße wie die Elemente (22, 24, 26, 28; 59; 60, 62, 64, 66; 80, 82, 84, 86) mit einer lichtbrechenden Struktur einer anderen Leuchte der Gruppe haben.

13. Leuchtensystem nach Anspruch 11 oder 12, **dadurch gekennzeichnet, daß** das oder die flächenförmigen Elemente (22, 24, 26, 28; 59; 60, 62, 64, 66; 80, 82, 84, 86) voneinander oder von dem Gehäuse des Hohllichtleiters zumindest für eine Leuchte des Systems durch mehrere Abstandselemente (40, 42) getrennt sind, welche unterschiedliche Abmessungen aufweisen.

**14.** Leuchtensystem nach einem der Ansprüche 1 bis 13, **dadurch gekennzeichnet, daß** zumindest für einen Teil der Leuchten des Systems die Lichtauskoppeleinrichtung (7) mindestens ein lichtdurchlässiges Element (22, 24, 26, 28) mit einer Grenzfläche zwischen zwei Medien mit einem unterschiedlichen Brechungsindex aufweist, die mit einer lichtbrechenden Struktur (30, 36) versehen ist, welche in mindestens einer Ebene senkrecht zu der Lichtaustrittsfläche (29) eine Lichtabstrahlung oberhalb eines Grenzwinkels (C) zu der Senkrechten zu der Lichtaustrittsfläche im wesentlichen verhindert, derart, daß in dieser Ebene eine Abschirmung des an der Lichtaustrittsfläche (29) austretenden Lichts herbeigeführt wird.

**15.** Leuchtensystem nach einem der Ansprüche 1 bis 14, **dadurch gekennzeichnet, daß** zumindest bei einem Teil der Leuchten des Systems die Lampe oder Lampen (9) außerhalb des Hohllichtleiters (3) angeordnet sind und von außen in den Hohllichtleiter (3) Licht einkoppeln.

**16.** Verfahren zum Herstellen einer Leuchte, insbesondere einer Einbau-, Anbau- oder Pendelleuchte, mit mindestens einem Hohllichtleiter (3), in den von einer oder mehreren Lampen (9) Licht eingestrahlt wird, und mindestens einer Lichtauskoppeleinrichtung (7) zum Auskoppeln von Licht aus dem Hohllichtleiter (3) zu einer Lichtaustrittsfläche, wobei die Lichtauskoppeleinrichtung (7) mindestens eine Grenzfläche zwischen zwei Medien mit einem unterschiedlichen Brechungsindex aufweist, die mit einer lichtbrechenden Struktur (30, 36) versehen ist, welche in mindestens einer Ebene senkrecht zu der Lichtaustrittsfläche (29) Licht gerichtet ablenkt, derart, daß in dieser Ebene die Lichtstärkeverteilungskurve des an der Lichtaustrittsfläche austretenden Lichts beeinflußt wird, wobei die Leuchte eine Tragekonstruktion (1) aufweist, an der ein oder mehrere vorgefertigte optisch wirksame Bauteile (5, 7, 11, 22, 24, 26, 28), welche den Strahlengang des von der Lampe (9) abgestrahlten Lichts beeinflussen, angebracht werden und welche eine bestimmte Fläche zur Aufnahme dieser optisch wirksamen Bauteile festlegt, **gekennzeichnet durch** die folgenden Schritte:

- Bereitstellen einer oder mehrerer vorgefertigter optisch wirksamer Bauelemente (22,24,26,28) mit vorgegebenen Abmessungen,
- Anordnen des oder der Bauelemente (22, 24, 26, 28) derart, daß die vorgegebene Fläche (29) vollständig oder bis auf einen Bereich ausgefüllt wird, dessen Abmessungen kleiner als die Abmessungen des Bauelements sind,
- Befestigen der Bauelemente (22, 24, 26, 28) an der Tragekonstruktion (1) entsprechend dieser Anordnung.

**17.** Verfahren nach Anspruch 16, **dadurch gekennzeichnet, daß** die Lichtauskoppeleinrichtung (7) eine Lichtauskoppelfläche, über der Licht aus dem Hohllichtleiter ausgekoppelt wird, mit einer vorgegebenen Abmessung besitzt, **gekennzeichnet durch** die folgenden Schritte:

- Bereitstellen einer oder mehrerer lichtdurchlässiger Platten (22, 24, 26, 28) mit einer eine Abschirmung erzeugenden lichtbrechenden Struktur (30, 36) an einer Grundfläche,
- Anordnen der Platte oder Platten (22, 24, 26, 28) derart, daß eine vorgegebene Fläche, welche der Lichtauskoppelfläche (29) entspricht, vollständig oder bis auf einen Bereich ausgefüllt wird, dessen Abmessungen kleiner als die Abmessungen der Platten sind,
- Befestigen der Platten (22, 24, 26, 28) in einer Öffnung des Gehäuses des Hohllichtleiters (3) in dieser Anordnung, derart, daß diese den Hohlraum (8) des Hohllichtleiters (3) ganz oder teilweise begrenzen.

**18.** Verfahren nach Anspruch 17, **dadurch gekennzeichnet, daß** zum Bilden der Lichtauskoppeleinrichtung mehrere Platten (22, 24, 26, 28) mit einer eine Abschirmung erzeugenden lichtbrechenden Struktur nebeneinander angeordnet werden, von denen mindestens zwei (22, 26, 24, 28) die gleiche Form und die gleichen Abmessungen aufweisen.

**Claims**

**1.** A lighting system consisting of a plurality of lights with different light radiation properties, particularly for standard, flush mounted, surface mounted and/or suspended lights, each comprising at least one hollow light guide (3) with a cavity (8) into which light is radiated from one or more lamps (9), and at least one light outputting device (7) for outputting light from the hollow light guide (3) to a light exit surface (29), the light outputting device (7) comprising at least one light-transmitting element (22, 24, 26, 28) with an interface between two media having a different refractive index, said interface being provided with a refractive structure (30, 36), which deflects light directionally in at least one plane perpendicularly to the light exit surface in such manner that the light intensity distribution curve of the light emerging at the light exit surface is influenced in said plane, the lights having a support structure (1) on or in which there is mounted at least one optically active element (5, 7, 11, 22, 24, 26, 28) which influences the path of the rays of light radiated by the lamp, **characterised in that** for each light at least one optically active component (5, 7, 11, 22, 24, 26, 28) which influences the path of the rays of light radiated by the lamp (9), particularly a reflecting or refractive element, is a prefabricated component which is so dimensioned that it can be mounted as an optically active element on or in each support structure (1) of a light of the system.

2.  A lighting system according to claim 1, **characterised in that** for each light at least one roof reflector (5), an element of the light outputting device (7) having a refractive structure and/or an inputting reflector (11) is a prefabricated component so dimensioned that it can be mounted on or in each support structure (1) of a light of the system.

3.  A lighting system according to claim 2, **characterised in that** for all the lights of the system at least one element (22, 24, 26, 28) of the light outputting device provided with a refractive structure, a roof reflector (5) and/or an inputting reflector (11), are substantially identical in respect of the relevant dimensions for mounting in or on the support structure.

4.  A lighting system according to any one of claims 1 to 3, **characterised in that** one or more first lights comprise a solely reflecting roof reflector (5) and one or more second lights comprise a partially light-transmitting roof reflector (5) for outputting an indirect light fraction, the roof reflector (5) of the first lights being so dimensioned that it can be mounted on or in the support structure (1) of the second lights and the roof reflector (5) of the second lights being so dimensioned that it can be mounted on or in the support structure (1) of the first lights.

5.  A lighting system according to any one of claims 1 to 4, **characterised in that** at least two lights of the system comprise a roof reflector (5), which is in each case so dimensioned that it can be mounted in or on the support structure (1) of the respective other light, the roof reflector (5) of one light having different reflecting properties from the roof reflector (5) of the other light.

6.  A lighting system according to any one of claims 1 to 5, **characterised in that** at least two lights of the system each comprise in the light outputting device one or more flat elements (22, 24, 26, 28; 59; 60, 62, 64, 66; 80, 82, 84, 86) having a refractive structure as part of the light outputting device (7), which are so dimensioned that they can be mounted in or on the support structure of the respective other light, the said flat elements of one light having a different refractive structure from the said flat elements of the other light.

7.  A lighting system according to claim 6, **characterised in that** the flat element or elements (22, 24, 26, 28; 59; 60, 62, 64, 66; 80, 82, 84, 86) of one light have the same length and width as the flat element or elements (22, 24, 26, 28; 59; 60, 62, 64, 66; 80, 82, 84, 86) of the other light.

8.  A lighting system according to any one of claims 1 to 7, **characterised in that** an inputting reflector of one or more first lights is different from an inputting reflector (11) of one or more second lights and is so dimensioned that the inputting reflector of the first lights can be used on or in the support structure (1) of the second lights and vice-versa.

9.  A lighting system according to claim 8, **characterised in that** the inputting reflector (11) of the first lights reflects light completely into the hollow light guide and the inputting reflector (11) of the second lights transmits or reflects light partially past the hollow light guide to deliver an indirect light fraction.

10. A lighting system according to any one of claims 1 to 9, **characterised in that** a plurality of lights have the same support structure (1) and differ respectively by one or more optically active components (5, 7, 11, 22, 24, 26, 28) which are fixed on the support structure and which respectively have the same dimensions relevant for mounting on or in the support structure but different technical light properties.

11. A lighting system according to any one of claims 1 to 10, **characterised in that** for a group of lights the light outputting surface via which light is output from the hollow light guide (3) differs for at least two different lights of said group and at least for some of the lights of the group the light outputting device (7) comprises a plurality of flat elements (22, 24, 26, 28; 59; 60, 62, 64, 66; 82, 84, 86) disposed side by side and respectively provided with a refractive structure (30, 36) directionally deflecting light, while for all the lights of this group at least one flat element with a structure directionally deflecting light has the same basic shape and the same relevant dimensions as a corresponding element of all the other lights of the group.

**12.** A lighting system according to claim 11, **characterised in that** all the flat elements (22, 24, 26, 28; 59; 60, 62, 64, 66; 82, 84, 86) having a refractive structure of a light of the group have the same basic shape and the same dimensions as the elements (22, 24, 26, 28; 59; 60, 62, 64, 66; 82, 84, 86) having a refractive structure of another light of the group.

**13.** A lighting system according to claim 11 or 12, **characterised in that** the flat element or elements (22, 24, 26, 28; 59; 60, 62, 64, 66; 80, 82, 84, 86) are separated from one another or from the hollow light guide housing at least for one light of the system by a plurality of spacer elements (40, 42) which have different dimensions.

**14.** A lighting system according to any one of claims 1 to 13, **characterised in that** at least for some of the lights of the system the light outputting device (7) comprises at least one light-transmitting element (22, 24, 26, 28) with an interface between two media having a different refractive index, said interface being provided with a refractive structure (30, 36) which in at least one plane perpendicular to the light exit surface (29) substantially prevents lights radiation above a limit angle (C) to the perpendicular to the light exit surface in such manner that a screening of the light emerging at the light exit surface (29) is produced in said plane.

**15.** A lighting system according to any one of claims 1 to 14, **characterised in that** the lamp or lamps (9) of at least some of the lights of the system are disposed outside the hollow light guide (3) and input light into the hollow light guide (3) from outside.

**16.** A method of producing a light, more particularly a flush mounted, surface mounted or suspended light, with at least one hollow light guide (3) into which light is radiated from one or more lamps (9), and at least one light outputting device (7) for outputting light from the hollow light guide (3) to a light exit surface, the light outputting device (7) having a least one interface between two media with a different refractive index, said interface being provided with a refractive structure (30, 36) which deflects light directionally in at least one plane perpendicular to the light exit surface (29), in such manner that the light intensity distribution curve of the light emerging at the light exit surface is influenced in said plane, the light having a support structure (1) on which are mounted one or more prefabricated optically active components (5, 7, 11, 22, 24, 26, 28) which influence the path of the rays of light radiated by the lamp (9) and which defines a specific surface to accommodate said optically active components, **characterised by** the following steps:

- preparing one or more prefabricated optically active components (22, 24, 26, 28) with predetermined dimensions,
- arranging the component or components (22, 24, 26, 28) in such manner that the predetermined surface (29) is filled completely or except for a zone of smaller dimensions than the dimensions of the component,
- fixing the components (22, 24, 26, 28) on the support structure (1) in accordance with this arrangement.

**17.** A method according to claim 16, **characterised in that** the light outputting device (7) has a light outputting surface via which light is output from the hollow light guide, with a predetermined dimension, **characterised by** the following steps:

- preparing one or more light-transmitting panels (22, 24, 26, 28) with a refractive structure (30, 36) on a base surface, said structure producing a screening effect.
- arranging the panel or panels (22, 24, 26, 28) in such manner that a predetermined surface corresponding to the light outputting surface (29) is filled completely or except for a zone of smaller dimensions than the dimensions of the panels,
- fixing the panels (22, 24, 26, 28) in an opening in the housing of the hollow light guide (3) in this arrangement in such manner that they completely or partially bound the cavity (8) of the hollow light guide (3).

**18.** A method according to claim 17, **characterised in that** to form the light outputting device a plurality of panels (22, 24, 26, 28) having a refractive structure producing a screening effect are disposed side by side, at least two thereof (22, 24, 26, 28) having the same shape and the same dimensions.

**Revendications**

**1.** Système de luminaires constitué de plusieurs luminaires ayant des propriétés d'émission différentes, en particulier de lampadaires, luminaires encastrés, luminaires appliques et/ou luminaires suspendus, qui présentent chacun au moins un conduit de lumière creux (3) ayant une cavité (8) dans laquelle une ou plusieurs lampes (9) envoient de la lumière, et au moins un dispositif de découplage de lumière (7) pour le découplage de lumière du conduit de lumière creux (3) à une surface de sortie de lumière (29), le dispositif de découplage de lumière (7) présentant au moins un élément transparent (22, 24, 26, 28) ayant une interface entre deux milieux d'indices de réfraction différents qui est pourvue d'une structure réfringente (30, 36) qui, dans au moins un plan perpendiculaire à la surface de sortie de lumière, dévie la lumière de manière dirigée, de façon telle que dans ce plan, la courbe de distribution de l'intensité lumineuse de la lumière sortant de la surface de sortie de lumière soit influencée, les luminaires présentant une construction portante (1) sur ou dans laquelle est monté au moins un élément actif optiquement (5, 7, 11, 22, 24, 26, 28) qui influe sur la marche des rayons de la lumière émise par la lampe, **caractérisé par le fait que** dans chaque luminaire, au moins un élément de construction actif optiquement (5, 7, 11, 22, 24, 26, 28) qui influe sur la marche des rayons de la lumière émise par la lampe (9), en particulier un élément réfléchissant ou réfringent, est un élément de construction préfabriqué qui est dimensionné de façon à pouvoir être monté comme élément actif optiquement sur et/ou dans chaque construction portante (1) d'un luminaire du système.

2. Système de luminaires selon la revendication 1, **caractérisé par le fait que** dans chaque luminaire, au moins un réflecteur en toit (5), un élément du dispositif de découplage de lumière (7) ayant une structure réfringente et/ou un réflecteur de couplage (11) est un élément de construction préfabriqué qui est dimensionné de façon à pouvoir être monté sur et/ou dans chaque construction portante (1) d'un luminaire du système.

3. Système de luminaires selon la revendication 2, **caractérisé par le fait que** pour tous les luminaires du système, au moins un élément (22, 24, 26, 28) pourvu d'une structure réfringente du dispositif de découplage de lumière, un réflecteur en toit (5) et/ou un réflecteur de couplage (11) est sensiblement identique en ce qui concerne les dimensions importantes pour le montage dans ou sur la construction portante.

4. Système de luminaires selon l'une des revendications 1 à 3, **caractérisé par le fait qu'**un ou plusieurs premiers luminaires présentent un réflecteur en toit (5) exclusivement réfléchissant et un ou plusieurs deuxièmes luminaires présentent un réflecteur en toit (5) partiellement transparent pour le découplage d'une fraction indirecte de lumière, le réflecteur en toit (5) des premiers luminaires étant dimensionné de façon à pouvoir être monté sur et/ou dans la construction portante (1) des deuxièmes luminaires et le réflecteur en toit (5) des deuxièmes luminaires étant dimensionné de façon à pouvoir être monté sur et/ou dans la construction portante (1) des premiers luminaires.

5. Système de luminaires selon l'une des revendications 1 à 4, **caractérisé par le fait qu'**au moins deux luminaires du système présentent un réflecteur en toit (5) qui est dimensionné de façon à pouvoir être placé dans ou sur la construction portante (1) de l'autre luminaire, le réflecteur en toit (5) d'un luminaire ayant d'autres propriétés réfléchissantes que le réflecteur en toit (5) de l'autre luminaire.

6. Système de luminaires selon l'une des revendications 1 à 5, **caractérisé par le fait qu'**au moins deux luminaires du système présentent chacun dans le dispositif de découplage de lumière un ou plusieurs éléments en forme de surface (22, 24, 26, 28 ; 59 ; 60, 62, 64, 66 ; 80, 82, 84, 86) ayant une structure réfringente comme constituant du dispositif de découplage de lumière (7), qui sont dimensionnés de façon à pouvoir être placés dans ou sur la construction portante de l'autre luminaire, lesdits éléments en forme de surface d'un luminaire présentant une autre structure réfringente que lesdits éléments en forme de surface de l'autre luminaire.

7. Système de luminaires selon la revendication 6, **caractérisé par le fait que** l'élément ou les éléments en forme de surface (22, 24, 26, 28 ; 59 ; 60, 62, 64, 66 ; 80, 82, 84, 86) d'un luminaire présente(nt) la même longueur et la même largeur que l'élément ou les éléments en forme de surface (22, 24, 26, 28 ; 59 ; 60, 62, 64, 66 ; 80, 82, 84, 86) de l'autre luminaire.

8. Système de luminaires selon l'une des revendications 1 à 7, **caractérisé par le fait qu'**un réflecteur de couplage d'un ou de plusieurs premiers luminaires diffère d'un réflecteur de couplage (11) d'un ou de plusieurs deuxièmes luminaires et est dimensionné de façon que le réflecteur de couplage des premiers luminaires puisse être placé sur et/ou dans la construction portante (1) des deuxièmes luminaires et inversement.

9. Système de luminaires selon la revendication 8, **caractérisé par le fait que** le réflecteur de couplage (11) des premiers luminaires réfléchit entièrement la lumière dans le conduit de lumière creux et le réflecteur de couplage (11) des deuxièmes luminaires laisse passer ou réfléchit partiellement la lumière devant le conduit de lumière creux pour l'émission d'une fraction indirecte de lumière.

**10.** Système de luminaires selon l'une des revendications 1 à 9, **caractérisé par le fait que** plusieurs luminaires présentent la même construction portante (1) et diffèrent par un ou plusieurs éléments de construction actifs optiquement (5, 7, 11, 22, 24, 26, 28) fixés à la construction portante qui ont les mêmes dimensions importantes pour le montage, mais des propriétés d'éclairagisme différentes.

**11.** Système de luminaires selon l'une des revendications 1 à 10, **caractérisé par le fait que** pour un groupe de luminaires, la surface de découplage de lumière par laquelle la lumière est découplée du conduit de lumière creux (3) diffère pour au moins deux luminaires différents de ce groupe et, au moins pour une partie des luminaires du groupe, le dispositif de découplage de lumière (7) présente plusieurs éléments en forme de surface (22, 24, 26, 28 ; 59 ; 60, 62, 64, 66 ; 80, 82, 84, 86) placés les uns à côté des autres qui sont pourvus chacun d'une structure réfringente (30, 36) déviant la lumière de manière dirigée, et pour tous les luminaires de ce groupe, au moins un élément en forme de surface ayant une structure déviant la lumière de manière dirigée présente la même forme de base et les mêmes dimensions importantes qu'un élément correspondant de tous les autres luminaires du groupe.

**12.** Système de luminaires selon la revendication 11, **caractérisé par le fait que** tous les éléments en forme de surface (22, 24, 26, 28 ; 59 ; 60, 62, 64, 66 ; 80, 82, 84, 86) à structure réfringente d'un luminaire du groupe ont la même forme de base et les mêmes dimensions que les éléments (22, 24, 26, 28 ; 59 ; 60, 62, 64, 66 ; 80, 82, 84, 86) ayant une structure réfringente d'un autre luminaire du groupe.

**13.** Système de luminaires selon l'une des revendications 11 et 12, **caractérisé par le fait que** l'élément ou les éléments en forme de surface (22, 24, 26, 28 ; 59 ; 60, 62, 64, 66 ; 80, 82, 84, 86) sont séparés les uns des autres ou du boîtier du conduit de lumière creux au moins pour un luminaire du système par plusieurs éléments d'espacement (40, 42) qui présentent des dimensions différentes.

**14.** Système de luminaires selon l'une des revendications 1 à 13, **caractérisé par le fait qu'**au moins pour une partie des luminaires du système, le dispositif de découplage de lumière (7) présente au moins un élément transparent (22, 24, 26, 28) ayant une interface entre deux milieux d'indices de réfraction différents qui est pourvue d'une surface réfringente (30, 36) qui, dans au moins un plan perpendiculaire à la surface de sortie de lumière (29), empêche pratiquement une émission de lumière au-dessus d'un angle limite (C) par rapport à la perpendiculaire à la surface de sortie de lumière, de façon telle que dans ce plan soit provoquée une occultation de la lumière qui sort à la surface de sortie de lumière (29).

**15.** Système de luminaires selon l'une des revendications 1 à 14, **caractérisé par le fait qu'**au moins pour une partie des luminaires du système, la lampe ou les lampes (9) sont placées à l'extérieur du conduit de lumière creux (3) et envoient de la lumière de l'extérieur dans le conduit de lumière creux (3).

**16.** Procédé de fabrication d'un luminaire, en particulier d'un luminaire encastré, applique ou suspendu, comportant au moins un conduit de lumière creux (3) dans lequel une ou plusieurs lampes (9) envoient de la lumière, et au moins un dispositif de découplage de lumière (7) pour le découplage de lumière du conduit de lumière creux (3) à une surface de sortie de lumière, le dispositif de découplage de lumière (7) présentant au moins une interface entre deux milieux d'indices de réfraction différents qui est pourvue d'une structure réfringente (30, 36) qui, dans au moins un plan perpendiculaire à la surface de sortie de lumière (29), dévie la lumière de manière dirigée, de façon telle que dans ce plan, la courbe de distribution de l'intensité lumineuse de la lumière sortant de la surface de sortie de lumière soit influencée, le luminaire présentant une construction portante (1) sur laquelle sont placés un ou plusieurs éléments de construction actifs optiquement préfabriqués (5, 7, 11, 22, 24, 26, 28) qui influent sur la marche des rayons de la lumière émise par la lampe (9) et qui fixe une surface déterminée destinée à recevoir ces éléments de construction actifs optiquement, **caractérisé par** les étapes suivantes :

- préparation d'un ou de plusieurs éléments de construction actifs optiquement préfabriqués (22, 24, 26, 28) ayant des dimensions fixées,
- placement de l'élément ou des éléments de construction (22, 24, 26, 28) de façon telle que la surface fixée (29) soit remplie entièrement ou excepté une zone de dimensions inférieures aux dimensions de l'élément de construction,
- fixation des éléments de construction (22, 24, 26, 28) à la construction portante (1) selon ce placement.

**17.** Procédé selon la revendication 16, **caractérisé par le fait que** le dispositif de découplage de lumière (7) possède une surface de découplage de lumière ayant une dimension fixée et par laquelle la lumière est découplée du conduit de lumière creux, **caractérisé par** les étapes suivantes :

- préparation sur une surface de base d'une ou de plusieurs plaques transparentes (22, 24, 26, 28) ayant une structure réfringente (30, 36) produisant une occultation,
- placement de la plaque ou des plaques (22, 24, 26, 28) de façon telle qu'une surface fixée correspondant à la surface de découplage de lumière (29) soit remplie entièrement ou excepté une zone de dimensions inférieures aux dimensions des plaques,
- fixation des plaques (22, 24, 26, 28) dans une ouverture du boîtier du conduit de lumière creux (3) selon ce placement, de façon telle que celles-ci limitent entièrement ou partiellement la cavité (8) du conduit de lumière creux (3).

18. Procédé selon la revendication 17, **caractérisé par le fait que** pour la formation du dispositif de découplage de lumière sont placées les unes à côté des autres plusieurs plaques (22, 24, 26, 28) ayant une structure réfringente produisant une occultation dont au moins deux (22, 24, 26, 28) présentent la même forme et les mêmes dimensions.

Fig. 1

EP 1 132 679 B1

EP 1 132 679 B1

Fig. 2

Fig. 3

Fig. 4

Fig. 5

Fig. 6

Fig. 9

Fig. 7

Fig. 8

EP 1 132 679 B1